# EUROPÄISCHE PATENTSCHRIFT

(11) **EP 2 608 917 B1**
(45) Veröffentlichungstag und Bekanntmachung des Hinweises auf die Patenterteilung: **14.10.2015**
(21) Anmeldenummer: 11752516.2
(22) Anmeldetag: 29.08.2011
(51) Int. Cl.: B23D 47/02, B23D 47/04, B27B 5/065

(54) **SÄGEVORRICHTUNG**
SAWING DEVICE
DISPOSITIF DE SCIAGE

(30) Priorität: 27.08.2010 DE 202010011924 U
(43) Veröffentlichungstag der Anmeldung: 03.07.2013
(73) Patentinhaber: Wilhelm Altendorf GmbH & Co. KG, 32429 Minden (DE)
(72) Erfinder: ALTENDORF, Wilfried, 32429 Minden (DE)
(74) Vertreter: Eisenführ Speiser
(86) Internationale Anmeldenummer: PCT/EP2011/064801
(87) Internationale Veröffentlichungsnummer: WO 2012/025632

(56) Entgegenhaltungen:
- EP-A1- 0 394 521
- EP-A1- 1 837 110
- WO-A1-2009/107099
- DE-A1- 3 004 966
- DE-A1-102007 023 664
- DE-A1-102008 058 162
- DE-B3-102007 021 410

## Beschreibung

Die Erfindung betrifft eine Sägevorrichtung, insbesondere eine Kreissäge zum automatisierten oder manuellen Bearbeiten von Halbzeugen wie Platten, gemäß dem Obenbegriff des Anspruch 1. Eine solche Vorrichtung ist aus WO 2009/107099 A bekannt.

Solche als horizontale Plattensägen bezeichnete Sägen sind beispielsweise aus EP 1990119A1 bekannt und werden dazu eingesetzt, größere Halbzeuge aus Holzwerkstoffen, Kunststoffen oder Leichtmetallen zu präzise auf Maß gefertigten Bauteile zuzuschneiden, indem die Halbzeuge auf ein bestimmtes Maß und eine spezifische Geometrie zugesägt werden. Zur Ausführung eines Sägeschnitts wird dabei das Halbzeug fixiert und das Sägeblatt linear an dem Halbzeug entlanggeführt.

Mit der aus EP 1990119 A1 bekannten Plattensäge kann, eine größere Holzplatte auf einfache Weise in mehrere Abschnitte aufgeteilt werden, indem die Holzplatte auf Fixierschlitten fixiert wird, welche eine Bewegung der Holzplatte auf dem Querschlitten orthogonal zu der Vorschubrichtung des Sägeaggregats ermöglichen. Diese Art von Plattensägen eignet sich zur automatisierten Bearbeitung von Platten mit großen Ausmaßen, ohne dass ein Bediener oft manuell eingreifen muss, erfordert dann aber eine große Stellfläche, die zumindest der maximal zu bearbeitenden Halbzeuggröße entspricht oder diese übersteigt.

Bei diesen vorbekannten Sägevorrichtungen wird ein hoher Automatisierungsgrad in der Bearbeitung erreicht, indem die Bewegung des Sägeaggregats und die Zustellbewegungen der Halte- und Anschlagsvorrichtungen vorab programmierbar sind. Dies ermöglicht es einem Benutzer, die Aufteilung eines Halbzeugs effizient zu planen und auszuführen.

Es ist eine Aufgabe der vorliegenden Erfindung, eine kompakte und dabei flexibler einsetzbare Sägevorrichtung bereitzustellen, welche eine Bearbeitung großer Halbzeuge bei beengten Platzverhältnissen auf einfache Weise erlaubt. Es ist eine weitere Aufgabe der vorliegenden Erfindung, den konstruktiven Aufwand an solchen Plattensägen bei gleicher oder sogar erhöhter Flexibilität zu verringern. Ferner ist es eine Aufgabe der vorliegenden Erfindung, eine Sägevorrichtung bereitzustellen, welche in unterschiedlichen Einsatzzwecken effizient genutzt werden kann, insbesondere auch bei zumindest teilweiser manueller Bedienung. Z r Diese Aufgaben werden durch die Merkmale des Anspruchs 1 gelöst... Z

Erfindungsgemäß können also sowohl das Sägeaggregat als auch mindestens ein Querschlitten verfahren werden. Dabei kann insbesondere vorgesehen sein, dass der Querschlitten an der Aufnahmevorrichtung verfahrbar ist. Je nach Abmessungen des Querschlittens und nach Anforderungen an die manuelle, halbautomatische oder automatische Bedienbarkeit durch einen Bediener kann der Querschlitten über den gesamten Verfahrweg des Sägeaggregats oder einen begrenzten Bereich dieses Verfahrwegs verfahrbar ausgeführt sein. Erfindungsgemäß ist das Sägeaggregat automatisch oder manuell mittels des Sägeaggregats-Aktuators verfahrbar. Die Länge des Verfahrbereichs stellt eine Auslegungs-Variable bei der Konstruktion erfindungsgemäßer Sägevorrichtungen dar, welche die Länge des maximal ausführbaren, kontinuierlichen Sägeschnitts bestimmt. Das Sägeaggregat kann dabei unterhalb der Maschinenauflage angeordnet sein und auch vollständig in dem Maschinengrundgestell integriert sein, insbesondere zusammen mit dem Sägeaggregat-Aktuator. Somit kann es als Unterflursägeaggregat von unten an ein Werkstück geführt werden bzw. unterhalb eines Werkstücks verfahren und positioniert werden.

Durch die Verfahrbarkeit von Sägeaggregat und eines jeweiligen Querschlittens ist es bei der erfindungsgemäßen Säge möglich, einen Sägeschnitt mit einer Länge auszuführen, welche größer als die maximale Länge des Weges ist, entlang welchem das Sägeaggregat oder ein jeweiliger Querschlitten alleine verfahrbar ist. Dies wird durch eine gegenläufige Bewegung von Sägeaggregat und Querschlitten während des Sägeschnitts erreicht, wodurch sich die Verfahrwege des Sägeaggregats und des jeweiligen Querschlittens zu einem langen, kontinuierlichen Sägeschnitt addieren. Hierdurch wird erreicht, dass für Schnitte gleicher Länge eine Sägevorrichtung mit kleineren Abmessungen als im Stand der Technik bereitgestellt werden kann. Zum anderen bedeutet es auch, dass bei den bisher üblichen Abmessungen einer Sägevorrichtung nun auch größere Platten bearbeitet werden können. Auch können in Relation zu einer bestimmten Schnittlänge Lagerungen wie z.B. Gleitschienen kürzer ausgeführt werden, was z.B. bei staubfrei zu haltenden, selbstschmierenden Lineargleitführungen zu Kosteneinsparungen und längeren Wartungsintervallen führen kann, insbesondere bei zwischen einem jeweiligen Querschlitten und Maschinengrundgestell angeordneten Linearführungen oder bei Linearführungen für ein Sägeaggregat.

Durch eine Anordnung des Sägeaggregats unterhalb der Maschinenauflage in Verbindung mit der Verfahrbarkeit von sowohl Sägeaggregat als auch Querschlitten wird eine kompakte, flexibel einsetzbare Sägevorrichtung geschaffen, welche sich neben der beschriebenen automatisierten oder teilautomatisierten Bearbeitungsweise auch gut für die manuelle Bearbeitung von Werkstücken eignet, z.B. in kleineren Manufakturen, Schreinereien, o. dgl. Unter einer manuellen Bearbeitungsweise kann hierbei eine Bearbeitungsweise verstanden werden, bei welcher das Werkstück auf einem jeweiligen Querschlitten platziert und dieser Querschlitten mittels Handkraft gegen das ortsfest rotierende Sägeblatt verschoben wird, um den Sägeschnitt auszuführen.

Besondere Vorteile, insbesondere in Bezug auf die Bedienbarkeit und den Platzbedarf der Sägevorrichtung, ergeben sich, wenn die Breite des Maschinengrundgestells schmal in Bezug auf die Länge des Maschinengrundgestells in Richtung der Vorschubachse ausgeführt ist. Das Längen-Breiten-Verhältnis kann z.B. im Bereich zwischen 2:1 bis 5:1 liegen. Die Gesamtbreite der Sägevorrichtung wird vor allem durch Auslegung der Größe der Maschinenauflage und des/der Querschlitten(s) festgelegt.

Gemäß eines Ausführungsbeispiels ist die Maschinenauflage ein- oder beidseitig der Vorschubachse längs eines Sägeschlitzes in der Maschinenauflage, durch welchen das Sägeblatt beim Schnitt von unten hindurch ragt, ausgebildet und definiert einen Bereich, in welchem ein Werkstück mit dem Sägeaggregat in Kontakt gebracht werden kann. Dabei ist grundsätzlich zu verstehen, dass die Auflageebene, welche durch die Maschinenauflage definiert wird, mit der Auflageebene, welche durch einen Querschlitten definiert wird, vorzugsweise übereinstimmend ist, um eine einfachere Handhabung von noch nicht zugeschnittenen als auch von zugeschnittenen bzw. abgeschnittenen Halbzeugen sicherzustellen.

Die Maschinenauflage erstreckt sich typischerweise über einen größeren Bereich des Maschinengrundgestells als der Sägeschlitz, insbesondere in Ausgestaltungen, in denen lediglich eine kleine Bewegungsfreiheit des Sägeaggregats entlang der Vorschubachse vorgesehen ist. Zur Erzielung langer Sägeschnitte kann eine solche Ausgestaltung mit einem weiten Verfahrbereich des Querschlittens versehen werden.

Unter Beweglichkeit des Querschlittens entlang der Translationsachse ist insbesondere zu verstehen, dass der Querschlitten entlang der Translationsachse verschoben oder verfahren werden kann. Grundsätzlich kann diese Bewegung manuell durch einen Bediener erfolgen, um einen Querschlitten in einer in Bezug auf die Bearbeitung eines Werkstücks günstigen Weise zu platzieren. Die Bewegung kann aber auch durch einen Antrieb oder Aktuator gesteuert erfolgen, beispielsweise einen elektrischen, pneumatischen oder hydraulischen Antrieb.

Grundsätzlich kann die Bewegung entlang der Translationsachse alleine durch eine leichtgängige und präzise Beweglichkeit zwischen Kopplungs- und Aufnahmevorrichtung bereitgestellt sein. In einer bevorzugten Ausführungsform kann auch vorgesehen sein, dass zusätzlich zur Kopplungs- und Aufnahmevorrichtung eine Führungsvorrichtung bereitgestellt ist, welche eine leichtgängige und präzise Verschiebebewegung des Querschlittens in Richtung der Translationsachse ermöglicht, wobei die Führungsvorrichtung zwischen Kopplungsvorrichtung und Querschlitten angeordnet ist, um eine Bewegung des Querschlittens relativ zu der an der Aufnahmevorrichtung festgesetzten Kopplungsvorrichtung zu ermöglichen. In diesem Fall dient die Kopplungs- und Aufnahmevorrichtung zur Positionierung des Querschlittens, während die Führungsvorrichtung nach erfolgter Positionierung und Festsetzung der Kopplungs- und Aufnahmevorrichtung zur Ausführung des Sägeschnitts durch entsprechende Bewegung des Querschlittens dient.

Die Bewegungsfreiheit des Querschlittens mittels der Aufnahmevorrichtung kann dem Verfahrweg des Sägeaggregats entsprechen, sie kann auch größer oder kleiner als dieser Verfahrweg sein. Für eine größtenteils automatisierte Bearbeitung wird eine kleinere Erstreckung als der Verfahrweg, für eine größtenteils manuelle Bearbeitung wird eine größere Erstreckung als der Verfahrweg bevorzugt.

Die Aufnahmevorrichtung ist vorzugsweise seitlich der Maschinenauflage angeordnet und derart ausgerichtet, dass die Oberfläche des an der Aufnahmevorrichtung gelagerten Querschlittens fluchtend zu der Oberfläche der Maschinenauflage ist.

Gemäß einer ersten bevorzugten Ausführungsform wird die erfindungsgemäße Sägevorrichtung fortgebildet durch einen Querschlitten-Aktuator, der an dem Maschinengrundgestell angeordnet und mit dem Querschlitten gekoppelt ist für eine Bewegung des Querschlittens entlang der Translationsachse (TA).

Weiterhin kann nach einer bevorzugten Ausführungsform eine Schnittführungs-Steuerungsvorrichtung vorgesehen sein, welche mit dem Sägeaggregat-Aktuator und gfs. mit dem Querschlitten-Aktuator signaltechnisch gekoppelt ist und ausgebildet ist, um den Sägeaggregat-Aktuator in Abhängigkeit der Position des Querschlittens anzusteuern und vorzugsweise den Querschlitten-Aktuator solcherart anzusteuern, dass das Sägeaggregat und der Querschlitten gleichzeitig in entgegengesetzter Richtung zueinander verfahren werden. Mit dieser Fortbildungsform wird erreicht, dass neben dem durch den Sägeaggregat-Aktuator bewegbaren Sägeaggregat auch der Querschlitten mittels eines Aktuators automatisch entlang der Translationsachse bewegt werden kann.

Der Querschlitten-Aktuator kann auch in eine Linearführung integriert sein, die zur Befestigung und Führung der Werkstückauflage am Maschinengrundgestell vorgesehen ist. In diesem Fall kann die Linearführung einen linearen Motor bilden, der dazu dient, um den Querschlitten solcherart anzutreiben, dass er entlang der Linearführung verschoben wird. Insbesondere kann hierbei der Stator ein Teil des Querschlittens sein und der Aktor ein Teil der Linearführung bzw. des Maschinengrundgestells sein. In gleicher Weise kann auch der Sägeaggregataktuator durch eine in seine Führung innerhalb des Maschinengrundgestells integrierte Antriebsvorrichtung, insbesondere einen Linearmotor, gebildet werden.

Ein Sägeaggregat-Aktuator, d.h. mindestens ein Antrieb zum Vorschub und gegebenenfalls für weitere Bewegungen des Sägeaggregats, kann dabei z.B. in Form eines Direktantriebs oder einer Kombination aus Motor und Getriebe ausgeführt sein. Je nach Ausführungsform und Einsatzzweck können z.B. auch Spindel-, Riemen-, Pneumatik-, Hydraulikantriebe zum Einsatz kommen.

Die Beweglichkeit des Querschlittens entlang der Translationsachse kann durch eine lineare Gleit- oder eine Wälzlager-geführte Lagerung bereitgestellt werden, wobei zu verstehen ist, dass insbesondere durch leichtgängige, ruckfreie und präzise Führung ein qualitativ hochwertiger Sägeschnitt ausgeführt werden kann. Die Bewegung von Querschlitten und Sägeaggregat wird durch die Schnittführungs-Steuerungsvorrichtung gesteuert. Hierbei kann insbesondere vorgesehen sein, dass die Steuerungsvorrichtung diese Bewegungen solcher Art ansteuert, dass die Bewegungen zeitgleich beginnen und zeitgleich enden, wobei der zwischen Beginn und Ende zurückgelegte Verfahrweg des Sägeaggregats verschieden von dem Verfahrweg des Querschlittens sein kann. Insbesondere kann die Schnittführungs-Steuerungsvorrichtung so ausgebildet sein, dass sie auf Grundlage von Bearbeitungsdaten, welche die Länge des durchzuführenden Schnitts betreffen, die Bewegung von Sägeaggregat und Querschlitten solcher Art ansteuert, dass sich das Sägeaggregat und ein Querschlitten entgegengesetzt zueinander bewegen. Die Bewegung kann zeitlich hinsichtlich Beginn und Ende der Bewegung übereinstimmend, zeitlich teilweise überschneidend oder zeitlich aufeinanderfolgend erfolgen. Die Summe der zurückgelegten Verschiebewege von Sägeaggregat und Querschlitten kann der Länge des auszuführenden Schnitts entsprechen oder diese um ein vorbestimmtes Maß übersteigen. Mit dieser Ausführungsform ist eine automatisierte Ausführung von Sägeschnitten möglich, die länger sind als der Verfahrweg des Sägeaggregats alleine.

Ein Bewegen bzw. Verfahren eines Querschlittens und/oder des Sägeaggregats kann dabei mit einem beliebigen Automatisierungsgrad erfolgen, sei es zum Teil von einem Bediener durch manuelles Verschieben eines Querschlittens, oder sei es vollautomatisch. Insbesondere kann auch eine halbautomatisierte Steuerung erfolgen, bei welcher der Bediener den Querschlitten manuell , d.h. ohne Mitwirkung oder mit nur zur manuellen Handkraft unterstützender Wirkung des Querschlittenaktuators bewegt, diese Bewegung durch einen Sensor erfasst wird und die Schnittführungs-Steuerungsvorrichtung ausgebildet ist, um die Daten dieses Sensors zu empfangen und das Sägeaggregat mittels des Sägeaggregataktuators zeitlich synchron und in der Bewegungsrichtung entgegengesetzt zu dem Querschlitten zu bewegen. In diesem Fall kann der Sägeaggregataktuator alleine in Abhängigkeit von der durch den Sensor erfassten Position, Bewegungsgeschwindigkeit und/oder Beschleunigung des Querschlittens angesteuert werden und auch auf das Vorhandensein eines Querschlittenaktuators verzichtet werden. Dabei kann die Bewegungsgeschwindigkeit des Sägeaggregats vorzugsweise so gewählt werden, dass das Sägeaggregat über den ihm zur Verfügung stehenden Verfahrweg zumindest weiterlaufen kann solange der Querschlitten mit der vom Benutzer geführten Geschwindigkeit bewegt wird, gegebenenfalls kann das Sägeaggregat noch alleine weiterlaufen wenn der Querschlitten bereits gestoppt ist. Die Bewegungsgeschwindigkeiten von Querschlitten und Sägeaggregat können von der Schnittführungs-Steuerungsvorrichtung stets so zueinander eingeregelt werden, dass eine vorbestimmte, insbesondere material- und/oder materialstärkeabhängige summarische Vorschubgeschwindigkeit nicht überschritten wird. Das heißt, das Sägeaggregat wird verlangsamt, wenn der Querschlitten beschleunigt wird und umgekehrt.

Neben diesen auf einen vorbestimmten Geschwindigkeitswert optimierten Steuerungsweisen ist es in bestimmten Anwendungen auch vorteilhaft, wenn die Schnittführungs-Steuerungsvorrichtung ausgebildet ist, um Daten von einem Sensor zu empfangen, der die Schnittkraft erfasst, beispielsweise indem die Leistungsaufnahme des / der Aktuatoren des Sägeaggregats und/oder des Querschlittens erfasst wird, und die summierte Vorschubgeschwindigkeit so einstellt, dass eine vorbestimmte Schnittkraft oder ein vorbestimmter Schnittkraftbereich nicht über- und/oder nicht unterschritten wird.

Der Querschlitten-Aktuator kann z.B. wie der Sägeaggregat-Aktuator als Direktantrieb ausgeführt sein, wobei für beide Aktuatoren auch andere Antriebe, beispielsweise Spindel- oder Riementriebe zum Einsatz kommen können.

Als Schnittführungs-Steuerungsvorrichtung ist z.B. eine speicherprogrammierbare Steuerung (SPS) oder ein Computer (PC/IPC) geeignet, und es können sowohl der Ablauf als auch die zurückzulegenden Wege vorgegeben werden. Eine signaltechnische Kopplung kann drahtgebunden oder drahtlos, insbesondere durch Nutzen von lokalen Kommunikationsnetzwerken, erfolgen.

Ein gleichzeitiges Verfahren der beiden Aktuatoren in entgegengesetzter Richtung stellt eine schnelle Bearbeitung sicher. Neben den vorgenannten bevorzugten Regelungsmöglichkeiten sind auch lediglich eine oder zwei unterschiedliche summierte Vorschubgeschwindigkeiten für den Fall einstellbar, dass die Vorschubgeschwindigkeiten von sowohl dem Sägeaggregat als auch dem Querschlitten nur auf entsprechend einen einzigen oder zwei definierte Werte einstellbar ausgeführt sind, z.B. bei einer Sägevorrichtung, bei welcher aus Kostengründen auf variabel steuer- oder regelbare Vorschub- bzw. Translationsgeschwindigkeiten verzichtet wird.

Eine erfindungsgemäße Sägevorrichtung ermöglicht somit ein verbessertes Handling, sowohl bei großen als auch bei kleinen Werkstücken. Ein Bediener braucht z.B. in Bezug auf eine definierte Schnittlänge nur eine kleinere Translations-Bewegung des Querschlittens auszuführen, wenn auch das Sägeaggregat beim Schnitt verfahren wird. Es wird im Arbeitsumfeld folglich vor und hinter dem Maschinengrundgestell weniger Platz benötigt. Ferner kann ein Bediener die Vorschubgeschwindigkeit selbst regeln, insbesondere manuell durch Verschieben eines Querschlittens in Translationsrichtung (Translations-Bewegung), und dabei z.B. in Abhängigkeit der Härte einer zu bearbeitenden Holzplatte die Vorschubgeschwindigkeit aufgrund der von ihm ertasteten Handkraft optimieren.

Dies ist insbesondere bei der Bearbeitung von Massivholz von Bedeutung, dessen Härte bei einem einzelnen Werkstück über die Schnittlänge varüeren kann. Weiterhin sind so auch Werkstücke bearbeitbar, welche eine varüerende Stärke entlang der Schnittlänge aufweisen, so dass in Bereichen größerer Dicke auf einfache Weise ein langsamerer Vorschub eingestellt werden kann. Somit kann eine Bewegung von Sägeaggregat und Querschlitten jeweils manuell und/oder automatisch erfolgen. Auch kann ein Bediener sich an einem günstigen Platz positionieren, und er hat einen guten Zugang zum Werkstück unabhängig von der Position des Sägeaggregats.

Die Erfindung ist gemäß einer weiteren bevorzugten Ausführungsform gekennzeichnet durch mindestens einen Auflagetisch, der an dem Maschinengrundgestell befestigbar ist, vorzugsweise mittels einer an dem Auflagetisch bereitgestellten Kopplungsvorrichtung, welche an einer am Maschinengrundgestell bereitgestellten Aufnahmevorrichtung befestigbar ist. Diese Ausgestaltung ist für zahlreiche Anwendungen vorteilhaft, da Werkstücke häufig zwischengelagert werden müssen, um sie beispielsweise nach Ausführung eines ersten Sägeschnitts mit einem oder mehreren weiteren Sägeschnitten weiter zu unterteilen. Grundsätzlich ist zu verstehen, dass der Auflagetisch eine Auflageebene definiert, insbesondere mittels einer Ablagefläche, wobei die Auflageebene vorteilhafterweise mit der Auflageebene des Maschinengrundgestells zusammenfällt. Insoweit kann der Auflagetisch eine reduzierte Funktion des Querschlittens erfüllen, indem bei dem Auflagetisch keine leichtgängige und präzise Verschiebemöglichkeit entlang der Translationsachse vorgesehen ist, sondern stattdessen lediglich eine Möglichkeit bereitgestellt wird, den Auflagetisch an unterschiedlichen Positionen entlang der Translationsachse zu positionieren und fixieren. Es können insbesondere zwei Varianten ausgebildet werden, eine Variante des Auflagetisches mit leichtgängiger und präziser Verschiebemöglichkeit und eine Variante mit einer einfachen, manuellen Beweglichkeit des Auflagetisches.

Der Auflagetisch kann jedoch auch für die Zwecke der Ablage von Werkstücken in spezifischer Weise fortgebildet sein, indem er ausgebildet ist, um die obere Auflagefläche vertikal abzusenken und anzuheben. Mit dieser spezifischen Ausgestaltung des Auflagetisches wird es möglich, mehrere Werkstückplatten oder Werkstücke auf dem Auflagetisch aufeinander zu stapeln und hierbei den Auflagetisch stets auf eine solche Position abzusenken, dass die nach oben weisende Fläche der gestapelten Werkstücke, insbesondere eines oberen Werkstücks, in der Ebene der Maschinenauflage liegt und somit ein leichtes Verschieben von Werkstücken auf den Werkstückstapel auf dem Auflagetisch ermöglicht oder etwas darüber liegt um somit ein leichtes Verschieben von Werkstücken von dem Werkstückstapel auf dem Auflagetisch auf die Maschinenauflage oder der Querschlitten zu ermöglichen.

Die Kopplungsvorrichtung des Auflagetischs kann dabei konstruktiv mit der Kopplungsvorrichtung für den Querschlitten übereinstimmen. Dies ermöglicht es, dass die Aufnahmevorrichtung für den Auflagetisch konstruktiv mit der Aufnahmevorrichtung des Querschlittens übereinstimmt oder identisch mit dieser ist.

Querschlitten und Auflagetisch werden nachfolgend gemeinsam als Tisch bezeichnet. Unter Tisch ist folglich entweder ein Querschlitten oder ein Auflagetisch zu verstehen, "Tische" bezeichnet einen oder mehrere Querschlitten und/oder einen oder mehrere Auflagetisch(e). Grundsätzlich ist zu verstehen, dass Fortbildungen, die für Querschlitten oder für Auflagetisch in dieser Beschreibung erläutert sind, auch umgekehrt für Auflagetisch bzw. für Querschlitten zum Einsatz kommen können. So ist insbesondere auch als Fortbildung vom Umfang der Erfindung umschlossen, dass die Aufnahmevorrichtungen für Querschlitten und Auflagetisch am Maschinengrundgestell durch eine einheitliche Aufnahmevorrichtung gebildet werden. Diese Aufnahmevorrichtung kann insbesondere solcherart ausgebildet sein und mit der entsprechenden Kopplungsvorrichtung am Querschlitten bzw. Auflagetisch zusammenwirken, dass damit zugleich ein Antrieb bzw. Aktuator bereitgestellt wird, um den Tisch entlang des Maschinengrundgestellt zu verfahren. Insbesondere kann dies in Gestalt der zuvor erläuterten Linearführung mit integriertem Linearmotor ausgeführt sein, wobei der Stator vorzugsweise am Tisch und der Aktor vorzugsweise am Maschinengrundgestell angeordnet ist.

Es kann eine Aufnahmevorrichtung vorgesehen sein, welche derart an dem Maschinengrundgestell angeordnet ist, dass ein Tisch mit deren Hilfe mit dem Maschinengrundgestell koppelbar ist. Insbesondere können an beiden Seiten des Maschinengrundgestells Aufnahmevorrichtungen vorgesehen sein, sodass einseitig oder wechselweise beidseits ein Tisch angekoppelt werden kann. Die Ankopplung kann insbesondere durch Ansetzen des Tisches von oben an die Aufnahmevorrichtung und nachfolgende Verschwenkung erfolgen, alternativ auch durch Aufschieben des Tisches von einer der Stirnseiten des Maschinengrundgestells aus. Dabei ist zu verstehen, dass die so bereitgestellte beidseitige Ankopplungsmöglichkeit unabhängig von den Steuerungsweisen von Sägeaggregat, Querschlitten und dem Vorhandensein eines Auflagetisches ist und insbesondere eine variable Sägevorrichtung bereitstellt, die durch einseitige oder beidseitige Ankopplung von ein oder mehr Tischen dem Benutzer eine Anpassung an räumliche Gegebenheiten und an Werkstück- und Schnittabmessungen ermöglicht.

Gemäß eines weiteren Ausführungsbeispiel kann auch eine Stützvorrichtung vorgesehen sein, die sich von der Außenseite eines Tisches ausgehend schräg nach unten zu einer Abstützeinrichtung verläuft, z.B. in Form einer Stützschiene, die sich parallel zu der Aufnahmevorrichtung erstreckt. Hierdurch können die von dem Tisch auf das Maschinengrundgestell ausgeübten Kräfte aufgenommen und in das Maschinengrundgestell weitergeleitet werden. Alternativ kann auch eine Abstützungsstrebe vorgesehen sein, die angeordnet und ausgebildet ist, um eine Abstützung des Querschlittens auf den Fußboden zu bewirken.

Gemäß eines weiteren Ausführungsbeispiels kann der Querschlitten als nach unten vollständig oder teilweise geschlossener Hohlraum ausgebildet werden, wobei dieser Hohlraum z.B. zur Aufnahme von Werkzeugen und Vorrichtungen genutzt werden kann, die durch obere oder seitliche Öffnungen aus dem Hohlraum entnommen werden können.

Somit können ein oder mehrere Tische an beliebigen Positionen in Bezug auf eine Null-Position eines Sägeaggregats an einer Aufnahmevorrichtung des Maschinengrundgestells angeordnet sein. Ein Tisch kann z.B. als Luftkissentisch ausgeführt sein, d.h. als ein Tisch, auf dem die Werkstücke durch ein aus einer Vielzahl von in der Tischoberfläche eingelassenen Düsen erzeugtes Luftpolster getragen und daher leicht verschoben werden können.

Auch ist es möglich, dass auf dem Auflagetisch ein Parallel-, Gehrungs- oder Winkelanschlag für ein Werkstück befestigt wird.

Der Tisch kann eine oder mehrere Werkstückspanneinrichtungen aufweisen, wobei die Werkstückspanneinrichtungen versenkbar, insbesondere integriert und herausschwenkbar sein können. Ferner kann der Querschlitten mindestens einen Fixierschlitten aufweisen, welcher im Wesentlichen orthogonal zu der Translationsrichtung verfahrbar ist. Ferner können an dem Tisch, insbesondere an dem Querschlitten und/oder an den Fixierschlitten eine oder mehrere Saugvorrichtungen vorgesehen sein, welche ein Fixieren eines Werkstücks ermöglichen, beispielsweise durch Betätigung einer Schalteinrichtung durch einen Bediener, insbesondere mittels Fußpedal.

Ebenso ist es vorteilhaft, wenn der Tisch eine Klemmung aufweist, insbesondere für ein Fixieren der Position an dem Maschinengrundgestell.

Gemäß einer weiteren bevorzugten Ausführungsform ist vorgesehen, dass die Rotationsachse in einer ersten Ausrichtung parallel zur Auflagefläche verläuft und in einer Schwenkebene aus dieser ersten Ausrichtung in zwei entgegengesetzten Schwenkrichtungen schwenkbar um eine Schwenkachse gelagert ist. Die Schwenkebene verläuft in einer spezifischen Ausgestaltung im Wesentlichen orthogonal zu der Auflagefläche und orthogonal zu der Vorschubrichtung (V) und ist ortsfest zum Sägeaggregat angeordnet. Hierdurch können auch Gehrungsschnitte mit einer gegenüber einer Auflagefläche bzw. gegenüber der Vertikalen geneigt ausgerichteten Schnittfläche ausgeführt werden.

Die Schwenkachse kann beabstandet und parallel zu der Vorschubachse verlaufen. Die Verschwenkung der Rotationsachse kann insbesondere durch eine Verschwenkung des Sägeaggregats oder von Teilen des Sägeaggregats erfolgen. Das Sägeaggregat bzw. der verschwenkbare Teil davon kann derart gelagert bzw. in das Maschinengrundgestell und/oder in die Maschinenauflage integriert sein, dass eine Schwenkbarkeit aus einer Null-Lage, in welcher die Rotationsachse horizontal ausgerichtet ist, in zwei entgegengesetzte Richtungen in der Schwenkebene um 45 bis 55 Grad, speziell 48 Grad möglich ist.

Je nachdem, ob das Sägeaggregat lediglich ein einziges Werkzeug wie ein Kreissägeblatt aufweist oder ob mehrere Werkzeuge, z.B. unterschiedliche Sägeblätter in einer Magazin- oder Revolverhalterung, vorgesehen sind, kann vorgesehen sein, dass nur ein Teil der Werkzeuge oder alle Werkzeuge schwenkbar gelagert ist/sind.

Die Oberfläche der Maschinenauflage und der Tische können z.B. aus einem schlagfesten Kunststoff, Glas, einem keramischen, mineralischen oder einem metallischen Werkstoff ausgeführt sein oder mit einem Überzug (Beschichtung) aus einem dieser Materialien versehen werden, der die Gleiteigenschaften zwischen Werkstück und Tischoberfläche optimiert. Dabei kann insbesondere vorgesehen sein, dass die Beschichtung unmittelbar auf die Maschinenauflage bzw. den Tisch aufgebracht wird und darauf ohne zusätzliche Hilfsmittel oder -stoffe haftet. Dies ermöglicht konstruktiv vorteilhafte Ausgestaltungen der Maschinenauflage und des Tisches mit einer zugleich sehr belastbaren Oberfläche. Die Auflageflächen können auch als Luftkissentisch, wie in EP 1 990 119 A1 beschrieben, ausgeführt werden. Die Auflageflächen von Maschinenauflage, und Tisch können als vollflächige Ebene ausgebildet sein oder als ebene Lagerstruktur bzw. -fläche aus einzelnen Streben und Teilauflageflächen gebildet werden.

Gemäß eines Ausführungsbeispiels ist die Sägeblattaufnahme mit einer Sägewelle verbunden, welche drehbar mittels mindestens eines Rotationslagers in dem Sägeaggregat gelagert ist. Durch die Lagerung des Sägeaggregats in dem Maschinengrundgestell, d.h. durch die Kopplung der Rotationsachse an eine lineare Führung in dem Maschinengrundgestell kann eine kompakte Sägevorrichtung bereitgestellt werden. Ein Portal zur Führung des Sägeaggregats ist dabei nicht erforderlich.

Gemäß eines Ausführungsbeispiels weist das Sägeaggregat ein Vorritzaggregat auf, welches zur Ausführung eines Einschnitts in Schnittrichtung vor der Sägeblattaufnahme angeordnet und vorzugsweise an dem Sägeaggregat befestigt ist. Das Vorritzaggregat wird bei einem Verfahren des Sägeaggregats mit diesem mitgeführt. Es ist vorzugsweise vertikal beweglich, um seine Ritztiefe einstellen zu können und es in abgesenktem Zustand mitzuführen, wenn nicht vorgeritzt werden soll.

Grundsätzlich kann das Hauptsägeblatt so ausgestaltet sein, dass es eine Schnittführung in beiden Richtungen entlang der Vorschubachse zulässt. In einem solchen Fall ist es vorteilhaft, gemäß eines weiteren Ausführungsbeispiels zwei Vorritzaggregate vorzusehen, die jeweils vertikal verstellbar sind, und welche in Bezug auf die Vorschubachse vor und hinter der Rotationsachse an dem Sägeaggregat angeordnet sind. Hierdurch kann ein Vorritzen in beiden Bewegungsrichtungen des Sägeaggregats erfolgen.

Gemäß eines Ausführungsbeispiels weist das Vorritzaggregat ein erstes und ein zweites Sägeblatt auf, welche konzentrisch zueinander angeordnet sind, und in ihrer axialen Lage relativ zueinander verschiebbar sind. Eine Verschiebbarkeit kann dahingehend ausgelegt sein, dass die Sägeblätter an die Schnittstärke eines an der Sägeblattaufnahme befestigten Hauptsägeblatts anpassbar sind.

Gemäß eines Ausführungsbeispiels umfasst die Auflagefläche eine Glasplatte zur Auflage eines Werkstücks. Die Glasplatte kann als eine separate Lage oder Beschichtung ausgeführt sein. Die Glasplatte kann spezifisch auf die jeweils meist zu handhabenden Werkstücke ausgelegt werden. Als Glasplattenlage kann eine Schicht bzw. Beschichtung zum Einsatz kommen, welche sich durch eine Oberfläche mit hoher Härte, Oberflächengüte und Gleiteigenschaften auszeichnet. Die Bereitstellung einer Glasplatte als werkstückauflage ist dabei als unabhängig von der steuerungstechnischen Ausführung der erfindungsgemäßen Sägevorrichtung und als unabhängig von den Möglichkeiten der ein- oder beidseitigen Ankopplung von ein oder mehr Querschlitten oder Auflagetischen zu betrachten.

Hierdurch ist die Sägevorrichtung zur Bearbeitung von Bauteilen mit empfindlichen Oberflächen besonders geeignet, wie beispielsweise lackierte, beschichtete oder polierte Halbzeuge.

Gemäß eines Ausführungsbeispiels ist der Querschlitten auf dem Maschinengrundgestell in mehreren definierten und in Richtung der Translationsachse voneinander beabstandeten Positionen arretierbar und um diese definierten Positionen in einem vorbestimmten Bereich entlang der Translationsachse verschiebbar gelagert, insbesondere stufenlos. Dabei kann ein Verschieben bzw. Arretieren automatisch und/oder manuell erfolgen. Diese Ausgestaltung ist unabhängig von etwaigen spezifischen Steuerungsweisen und Anordnungsweisen des Querschlittens oder des Sägeaggregats.

Arretierbar im Sinne der vorliegenden Erfindung bedeutet, dass eine Relativbewegung zwischen der Kopplungsvorrichtung und der Aufnahmevorrichtung nicht mehr möglich ist. Damit wird jedoch der Querschlitten nur dann in Bezug auf das Maschinengestell festgesetzt, wenn keine weiteren Einrichtungen für eine Bewegung des Querschlittens in Bezug auf das Maschinengestell vorhanden sind. Ist z.B. die Aufnahmevorrichtung selbst am Maschinengestell beweglich gelagert, beispielsweise verschieblich entlang der Vorschubachse, so kann eine Relativbewegung gleichwohl auch bei arretierter Stellung stattfinden. Das gleiche gilt, wenn zwischen Kopplungsvorrichtung und Werkstückablage noch eine bewegbare Führungseinrichtung vorhanden ist, um dann die Werkstückablage relativ zur an der Aufnahmevorrichtung fixierten Kopplungsvorrichtung zu bewegen. Arretieren bedeutet also nicht, dass ein arretiertes Teil grundsätzlich gar nicht mehr beweglich ist.

Insbesondere kann die Kopplungs- bzw. Aufnahmevorrichtung in diesem Fall dazu ausgebildet sein, ein jeweiliger Querschlitten in einer Arbeitsstellung an ihrer Position entlang der Translationsachse zu fixieren bzw. zu arretieren und in einer Verschiebestellung eine Verschiebebewegung zwischen Kopplungs- und Aufnahmevorrichtung entlang der Translationsachse zu ermöglichen. Ein jeweiliger Querschlitten kann stufenlos oder in diskreten Positionen entlang der Translationsachse arretierbar sein.

Bei einer solchen Ausgestaltung ist es möglich, den Querschlitten(n) in mehreren diskreten Positionen oder stufenlos entlang der Translationsachse mithilfe der Kopplungs- bzw. Aufnahmevorrichtung zu verschieben und dann in einer Position zu fixieren bzw. zu arretieren, um in einem durch den Verschiebeweg der Linearführung begrenzten Bereich um diese fixierte bzw. arretierte Position herum eine leichtgängige und präzise Verschiebebewegung des/r Querschlittens(n) in Richtung der Translationsachse zu ermöglichen und für die Ausführung eines Sägeschnitts zu nutzen.

Bevorzugt kann das Sägeaggregat an einer beliebigen oder vorbestimmten Stelle in seinem Verfahrbereich in Bezug auf die Vorschubachse fixiert werden bzw. feststellbar sein. Hierdurch wird es möglich, die erfindungsgemäße Sägevorrichtung zur Ausführung von Sägeschnitten zu nutzen, die durch Entlangführen eines auf der Werkstückablage angeordneten Werkstücks mittels Bewegung der Werkstückabiage am feststehenden Sägeblatt vorbei ausgeführt werden.

Erfindungsgemäß kann die eingangs beschriebene Sägevorrichtung oder ein bevorzugtes Ausführungsbeispiel der zuvor beschriebenen Ausführungsformen fortgebildet werden indem das Maschinengrundgestell beidseits der Vorschubachse jeweils mindestens eine zu der Vorschubachse parallel ausgerichtete Aufnahmevorrichtung aufweist, welche vorteilhafterweise baugleich zueinander ausgeführt sind. Beidseits ist hier als auf jeder Seite des Maschinengrundgestells zu verstehen, welche sich rechts und links neben und entlang des Sägeaggregats in der Translations- bzw. Vorschubrichtung erstrecken. Der Tisch kann eine Kopplungsvorrichtung aufweisen, die ausgebildet ist, an einer beliebigen der beiden Aufnahmevorrichtungen an dem Maschinengrundgestell angekoppelt zu werden. Ferner kann an die Aufnahmevorrichtung ausgebildet sein, um die Funktion einer Linearführung bereitzustellen. Entsprechend können parallel zu den Linearführungen verlaufende Abstützeinrichtungen beidseitig vorgesehen sein. Mit dieser Ausführungsform wird ein variabler Einsatz des/der Tische(s) eröffnet indem ein beidseitiges Ansetzen auf jeweils gegenüberliegenden Seiten oder auch ein Ansetzen auf einer gemeinsamen Seite in Bezug auf den Sägeschlitz ermöglicht wird. Dabei ist zu verstehen, dass vorzugsweise ein oder jeder Tisch insbesondere beidseits angesetzt werden kann, indem sie um 180° verschwenkt werden, alternativ kann aber auch vorgesehen sein, dass an einem oder jedem Tisch zwei gegenüberliegende Kopplungsvorrichtungen bereitgestellt sind, die ein entsprechend beidseitiges Ankoppeln ermöglichen.

Die erfindungsgemäße Sägevorrichtung zeichnet sich durch eine modulartige Aufbauweise aus, die es einem Anwender ermöglicht, eine für seine allgemeinen Zwecke geeignete und/oder auf die ihm zur Verfügung stehenden Platzverhältnisse passende Sägevorrichtung durch Zusammenstellung der hierfür benötigten Module zu konfigurieren und diese dann weiterhin an jeweils auftretende Aufgabenstellungen durch Verschiebung oder Versetzung von einzelnen Bestandteilen anzupassen. Grundsätzlich ist zu verstehen, dass neben dem zuvor erläuterten Querschlitten und/oder dem Auflagetisch auch ein oder mehrere zusätzliche weitere Tische vorgesehen sein können. Hierdurch ist es weiterhin möglich, eine einfache Bedienung der Sägevorrichtung weitgehend unabhängig von einem Aufstellungsort oder von den Eigenheiten eines Bedieners sicherzustellen, z.B. sowohl für einen Rechts- als auch für einen Linkshänder.

Gemäß einer weiteren bevorzugten Ausführungsform ist ein zweiter Querschlitten mit einer Kopplungsvorrichtung, welche von dem ersten Querschlitten beabstandet an der Aufnahmevorrichtung an dem Maschinengrundgestell angekoppelt ist, vorgesehen und weiterhin wird eine Kopplungseinheit bereitgestellt, welche dazu ausgebildet ist, die erste und die zweite Auflagefläche derart miteinander mechanisch und/oder steuerungstechnisch zu koppeln, dass deren Bewegung synchron entlang der Translationsachse erfolgt. Dies ermöglicht es einerseits dass ein Bediener lediglich einen der Querschlitten betätigt, diese sich aber synchron bewegen, um beispielsweise ein besonders großes Werkstück aufzunehmen. Die beiden synchron gekoppelten Querschlitten können dabei auf einer gemeinsamen Seite oder auf verschiedenen Seiten angeordnet sein. In gleicher Weise können auch mehrere Querschlitten vorgesehen sein, die dann beliebig miteinander gekoppelt sind.

Die Kopplung kann einerseits steuerungstechnisch erfolgen, d.h. der Querschlitten sind grundsätzlich mittels eines oder jeweils eines Aktuators individuell verfahrbar, die Verfahrbewegung wird aber mittels einer Steuerungseinheit synchron gekoppelt, indem entweder beide Querschlitten synchron mittels einem einzigen Aktuator bewegt werden oder zwei oder mehr Aktuatoren für entsprechend zwei oder mehr Querschlitten zur synchronen Verfahrbewegung angesteuert werden. Alternativ oder ergänzend hierzu kann auch eine mechanische Kopplung vorgesehen sein, indem ein mechanisches Kopplungselement, beispielsweise eine teleskopierbare Kopplungsstange, die beiden Querschlitten miteinander in einem fest vorbestimmten oder einem durch Verlängerung oder Verkürzung des Kopplungselements variablen Abstand verbindet und Bewegungskräfte von der einen auf den anderen Querschlitten überträgt. Grundsätzlich kann die mechanische oder steuerungstechnische Kopplung zwischen zwei oder mehr Tischen vorgesehen sein, die an einer Seite des Maschinengrundgestells angeordnet sind. Es kann aber auch eine Kopplung zwischen Tischen vorgesehen sein, die an einander gegenüberliegenden Seiten des Maschinengrundgestells angeordnet sind.

Die erfindungsgemäße Sägevorrichtung stellt somit eine hohe Flexibilität bereit. So können nicht nur mehrere Tische beidseitig der Vorschubachse des Sägeaggregats als starrer oder beweglicher Tisch vorgesehen sein, sondern es können auch auf einer jeweiligen Seite mehrere Tische miteinander gekoppelt sein und z.B. als zweiteiliger beweglicher Tisch ausgebildet sein.

Ferner ist es erfindungsgemäß möglich, dass ein Bediener zwischen zwei Tische eintreten und somit zu jeder Zeit nahe der Stelle, an welcher ein Schnitt ausgeführt werden soll, die Positionierung überwachen oder auch selbst durchführen kann, was auch bei bewegtem Sägeaggregat möglich ist.

Gemäß eines Ausführungsbeispiels ist die Sägeblattaufnahme, insbesondere ein die Sägeblattaufnahme umfassender Teil des Sägeaggregats oder das gesamte Sägeaggregat, zwischen einer Arbeitsstellung und einer abgesenkten Sicherheitsstellung vertikal bewegbar in Bezug auf das Maschinengestell gelagert. Der Betrag, um den diese vertikale Bewegung erfolgt, ist vorzugsweise einstellbar, um die Arbeitsstellung für Werkstücke unterschiedlicher Dicke einstellen zu können. Hierdurch ist sichergestellt, dass eine Schnittführung jeweils in Bezug auf eine spezifische Dicke bzw. Wandstärke eines zu bearbeitenden Halbzeugs unter dem idealen Schneidwinkel erfolgen kann.

Gemäß einer weiteren bevorzugten Ausführungsform weist die Sägevorrichtung eine am Maschinengestell befestigte Brücke, die sich im Bereich oberhalb des Sägeschlitzes in dessen Richtung erstreckt eine Schutzhaube, welche oberhalb des Sägeschlitzes angeordnet ist und verschiebbar an der Brücke gelagert ist, einen Schutzhauben-Aktuator, der mit der Schutzhaube gekoppelt ist für eine Verschiebung der Schutzhaube entlang der Brücke in Richtung der Vorschubachse, und eine Schutzhauben-Steuerungsvorrichtung, welche signaltechnisch mit dem Schutzhauben-Aktuator und dem Sägeaggregat-Aktuator gekoppelt ist und ausgebildet ist, um den Schutzhauben-Aktuator und den Sägeaggregat-Aktuator solcherart anzusteuern, dass sich Schutzhaube und Sägeaggregat synchron entlang der Vorschubrichtung bewegen und die Schutzhaube stets relativ zur Rotationsachse in einer konstanten horizontalen Position oberhalb und in Bezug auf die Rotationsachse der Sägeblattaufnahme positioniert ist. Als Schutzhauben-Steuerungsvorrichtung kann z.B. eine speicherprogrammierbare Steuerung (SPS) geeignet sein. Eine signaltechnische Kopplung, insbesondere mit der Steuerungsvorrichtung für die Schnittführung, kann über physische Leitungen oder auch drahtlos, insbesondere durch Nutzen von lokalen Standardnetzwerken der Kommunikation, erfolgen.

Somit kann eine mitfahrende Schutzhaube vorgesehen sein, insbesondere um hierdurch den Benutzer gegen unbeabsichtigtes Hineingreifen in das Sägeblatt zu schützen und um beim Sägevorgang anfallende Späne abzusaugen. Zu letzterem Zweck kann an dieser mit der Bewegung des Sägeaggregats mitfahrenden Vorrichtung eine Absaugung integriert sein. Die Brücke kann erfindungsgemäß durch ein Längsprofil ausgebildet werden, welches parallel zu der Maschinenauflage und der Vorschubachse verläuft, und welches über eine, zwei oder mehr vertikale Stützen mit dem Maschinengrundgestell verbunden ist. Dadurch wird die Handhabung eines Werkstücks kaum oder gar nicht durch die Brücke behindert. Die Schutzhaube kann an der Brücke insbesondere über einen Riementrieb bewegt sein.

Erfindungsgemäß kann die mitfahrende, angetriebene Schutzhaube auskoppelbar sein, also von der Bewegung eines Sägeaggregats entkoppelt werden, insbesondere zum Schneiden großer, voluminöser dünnwandiger Werkstücke. Somit kann eine verbesserte Sicherheitstechnik eingesetzt werden, und der Schutz für einen Bediener ist höher.

Alternativ zur mitfahrenden Schutzhaube kann der Sägeschnitt auch mittels eines Schutzvorhangs, der seitlich vertikal bewegliche Lamellen aufweist, abgedeckt werden.

Weiter bevorzugt ist eine bewegliche Bedieneinheit vorgesehen, welche derart bewegbar ausgeführt ist, dass eine an der Bedieneinheit vorhandene Benutzerschnittstelle für eine Bedienung von der einen Längsseite oder der anderen Längsseite des Maschinengestells ausgerichtet ist. So kann die Bedienung beidseits der Vorschubachse, entlang welcher das Sägeaggregat verfahrbar ist, ausgeführt werden. Insbesondere kann die Bedieneinheit an der Brücke angeordnet und um eine vertikale Achse schwenkbar und/oder entlang der Erstreckungsrichtung der Brücke verschiebbar ausgeführt sein, so dass eine Bedienung an jedem Punkt entlang der Vorschubachse möglich ist.

Es ist bevorzugt vorgesehen, dass die Bedieneinheit eine grafische Ausgabeeinheit und eine mit dieser signaltechnisch gekoppelte Steuerungseinheit aufweist, welche ausgebildet ist, um einem Bediener Information in Bezug auf durchzuführende Schnitte zu übermitteln. In diesem Fall kann die Steuerungseinheit Daten von einer Arbeitsplanungssoftware empfangen, diese verarbeiten und dem Benutzer stets vor jedem durchzuführenden Schnitt auf der grafischen Ausgabeeinheit anzeigen, welches Werkstück und in welcher Lage und Ausrichtung er das Werkstück aufzulegen hat. Die grafische Ausgabeeinheit kann insbesondere ein Bildschirm sein. Es ist zu verstehen, dass das Werkstück, seine Lage und Ausrichtung lediglich symbolisch auf der Ausgabeeinheit angezeigt werden, um ein schnelles und fehlerfreies Arbeiten zu ermöglichen, die präzise Anordnung zur maßhaltigen Schnittdurchführung aber anhand anderer Hilfsmittel wie Anschlagschiene, Anschlagklappen oder dergleichen erfolgt.

Es ist weiter bevorzugt vorgesehen, dass eine Erfassungsvorrichtung bereitgestellt ist, welche die Position eines Bedieners erkennt. Dies ermöglicht es, die SollPosition eines Werkstücks dem Bediener anzuzeigen, um ihm zu signalisieren, wie ein zu bearbeitendes Werkstück anzulegen ist bzw. wie eine Anschlagschiene o. dgl. auszurichten ist, um einen ganz bestimmten Schnitt durchführen zu können. Dabei kann die Darstellung derart erfolgen, dass die Soll-Lage bzw. SollPosition des Werkstücks aus Sicht der jeweiligen Position eines Bedieners dargestellt wird. Dies erleichtert die Bearbeitung, denn es fordert von einem Bediener z.B. weniger räumliches Vorstellungsvermögen, wobei auch die Fehler (Verschnitt, Ausschuss, Mehrverbrauch) gesenkt werden können. In einer einfachen Ausgestaltung kann die Erfassungsvorrichtung die jeweilige Position und Ausrichtung der Bedieneinheit in Bezug auf die Brücke mittels entsprechender Sensoren erfassen und auf diese Weise die Position des Bedieners erfassen. Darüberhinaus kann die Benutzerposition durch Videoerfassung mit Bildauswertung erfolgen.

Eine erfindungsgemäße Sägevorrichtung kann ferner mit einer Steuerungseinheit ausgestattet sein, welche zum einen eine halbautomatische oder vollautomatische Bearbeitung sicherstellen kann, zum anderen aber auch die Verfahrbewegung bzw. den Freiheitsgrad von einem Sägeaggregat bzw. einem Querschlitten in Abhängigkeit der Lage von Ablage- bzw. Zusatztischen bestimmen kann. D.h., die Steuerungseinheit der Sägevorrichtung kann selbstständig erkennen, beispielsweise über Kameras zur Lageerfassung oder über Sensoren wie z.B. Lichtschranken an der mindestens einen Aufnahmevorrichtung, an welchen Stellen ein Querschlitten oder ein Auflagetisch angeordnet ist. Gleichermaßen kann die Funktion einzelner Querschlitten oder Ablagetische, z.B. die Einstellung einer Anschlagschiene oder Anschlagklappe auf einem Querschlitten selbständig ohne Benutzervorgabe von der Steuerung erkannt werden, und in Abhängigkeit davon die Vorschubbewegung des Sägeaggregats und oder die Translationsbewegung des jeweiligen Querschlittens begrenzt werden. Eine Erkennung des Typs des Querschlittens/des Auflagetischs kann beispielsweise über RFID-Chips erfolgen, und eine Konfiguration der Steuerung kann nach einer Erkennung automatisch erfolgen, so dass auch Querschlitten oder Auflagetische nachgerüstet werden können und die Steuerungseinheit sich dann automatisch neu konfiguriert. Eine Fehlbedienung oder Kollision des Querschlittens kann damit ausgeschlossen werden, selbst wenn ein Bediener vergisst, nach Montage weiterer Tische den Bearbeitungsbereich bzw. die auszuführenden Schnitte neu festzulegen.

Die eingangs beschriebene Sägevorrichtung oder die zuvor beschriebenen erfindungsgemäßen Ausführungsformen dieser Sägevorrichtung können weiter fortgebildet werden durch eine am Maschinengestell befestigte Brücke, die sich im Bereich oberhalb des Sägeschlitzes in dessen Richtung erstreckt, eine Schutzvorrichtung, welche oberhalb des Sägeschlitzes angeordnet ist und beweglich an der Brücke gelagert ist, einen Schutzvorrichtungs-Aktuator, der mit der Schutzvorrichtung gekoppelt ist für eine Bewegung der Schutzhaube in Bezug auf die Brücke, und eine Schutzvorrichtungs-Steuerungsvorrichtung, welche signaltechnisch mit dem Schutzvorrichtungs-Aktuator und dem Sägeaggregat-Aktuator gekoppelt ist und ausgebildet ist, um den Schutzvorrichtungs-Aktuator und den Sägeaggregat-Aktuator solcherart anzusteuern, dass sich das Sägeaggregat nur dann entlang der Vorschubrichtung bewegen lässt, wenn die Schutzvorrichtung in eine solche Position bewegt ist, dass sie verletzungsgefährliche Teile am Sägeaggregat abdeckt. Unter verletzungsgefährlichen Teilen ist hierbei insbesondere das Sägeblatt zu verstehen. Auf diese Weise wird die Verletzungsgefahr maßgeblich herabgesetzt.

Vorzugsweise ist vorgesehen, dass die Schutzvorrichtung eine Schutzhaube ist, welche oberhalb des Sägeschlitzes angeordnet ist und verschiebbar an der Brücke gelagert ist, der Schutzvorrichtungs-Aktuator ein Schutzhauben-Aktuator ist, der mit der Schutzhaube gekoppelt ist für eine Verschiebung der Schutzhaube entlang der Brücke in Richtung der Vorschubachse, und die Schutzvorrichtungs-Steuerungsvorrichtung eine Schutzhauben-Steuerungsvorrichtung ist, welche signaltechnisch mit dem Schutzhauben-Aktuator und dem Sägeaggregat-Aktuator gekoppelt ist und ausgebildet ist, um den Schutzhauben-Aktuator und den Sägeaggregat-Aktuator solcherart anzusteuern, dass sich Schutzhaube und Sägeaggregat synchron entlang der Vorschubrichtung bewegen und die Schutzhaube stets relativ zur Rotationsachse in einer konstanten horizontalen Position oberhalb und in Bezug auf die Rotationsachse der Sägeblattaufnahme positioniert ist. Dabei kann vorteilhaft vorgesehen sein, dass die Schutzhaube an der Brücke vertikal beweglich gelagert ist und weiterhin gekennzeichnet durch eine Kopplungseinheit, welche ausgebildet ist, um eine vertikale Bewegung der Sägewelle mit einer vertikalen Bewegung der Schutzhaube solcherart zu koppeln, dass die Schutzhaube abgesenkt wird, wenn die Sägewelle angehoben wird, und umgekehrt.

Weiterhin ist es vorteilhaft, wenn die Schutzvorrichtung ein Doppel-Lamellenvorhang ist, welcher oberhalb des Sägeschlitzes angeordnet ist, sich in Brückenlängsrichtung beidseits zum Sägeschlitz erstreckt und an der Brücke vertikal beweglich gelagert ist, der Schutzvorrichtungs-Aktuator ein Lamellenvorhangs-Aktuator ist, der mit dem Doppei-Lamellenvorhang gekoppelt ist für eine Bewegung des Doppel-Lamellenvorhang in vertikaler Richtung, und die Schutzvorrichtungs-Steuerungsvorrichtung eine Doppel-Lamellenvorhang-Steuerungsvorrichtung ist, welche signaltechnisch mit dem Lamellenvorhangs-Aktuator und dem Sägeaggregat-Aktuator gekoppelt ist und ausgebildet ist, um den Lamellenvorhangs-Aktuator und den Sägeaggregat-Aktuator solcherart anzusteuern, dass sich das Sägeaggregat nur dann entlang der Vorschubrichtung bewegen lässt, wenn der Doppel-Lamellenvorhang in eine abgesenkte Position bewegt ist, so dass er verletzungsgefährliche Teile am Sägeaggregat abdeckt.

Es kann weiterhin eine Absaugungsvorrichtung vorgesehen sein, welche die nach oben über die Werkstückauflagefläche und in den durch den DoppelLamellenvorhang begrenzten Raum transportierten Späne während des Sägeschnittes aufnimmt und aus diesem Raum abtransportiert.

Bei dieser Alternative weist die erfindungsgemäße Sägevorrichtung anstelle der zuvor erläuterten vertikal und horizontal beweggbaren Schutzhaube eine sich entlang des gesamten Verfahrweges des Sägeaggregats beidseits oberhalb des Sägeschlitzes erstreckende Sicherheitsabdeckung auf. Solch eine Sicherheitsabdeckung kann insbesondere als Lamellenvorhang ausgeführt sein. Die Sicherheitsabdeckung ist hierbei vorzugsweise solcherart ausgeführt, dass sie mehrere bewegliche Elemente aufweist, die den Bereich oberhalb des Sägeschlitzes zur Seite hin absperren und hierbei von einem Portal, welches sich entlang und oberhalb des Sägeschlitzes erstreckt, gehalten werden können. Auf diese Weise wird der Gefahrenbereich oberhalb des Sägeschlitzes zuverlässig abgesperrt gegen einen versehentlichen Zugriff eines Bedieners und zugleich die bei Ausführung des Sägeschlitz entstehenden Späne in einem eng umgrenzten Bereich gehalten, um diese einer Absaugung zuführen zu können. Besteht die Schutzabdeckung aus mehreren Lamellen, so können diese insbesondere solcherart miteinander gekoppelt sein, dass sie gleichzeitig mittels eines Aktuators angehoben werden, um den Lamellenvorhang anzuheben, d.h. von der Ebene des Querschlittens nach oben zu bewegen. In einer solchen angehobenen Position kann dann ein Werkstück oberhalb des Sägeschlitzes positioniert werden. Zur Ausführung des Sägeschnittes ist der Lamellenvorhang dann wiederum abzusenken, wobei insbesondere vorgesehen sein kann, dass durch eine Sicherheitsschaltung die Betätigung der Verschiebebewegung des Sägeaggregats und/oder der Rotationsbewegung des Sägeblattes nur möglich ist, wenn der Lamellenvorhang abgesenkt und folglich in der Sicherheitsposition ist. Dabei kann insbesondere auch vorteilhaft vorgesehen sein, dass der Lamellenvorhang so ausgeführt ist, dass die einzelnen Lamellen einen Bewegungsspielraum unabhängig voneinander haben, um hierdurch zu ermöglichen, dass sich Lamellen einerseits auf ein im Bereich des Sägeschlitzes angeordnetes Werkstück von oben anlegen, andererseits Lamellen im Bereich des Sägeschlitzes, in dem kein Werkstück aufliegt, auf die Ebene des Querschlittens absenken und hierdurch den Gefahrbereich zuverlässig abdecken.

Eine solche Schutzabdeckung kann als zusätzliche Funktion auch eine Spannfunktion auf das Werkstück ausüben, indem die Einzelelemente der Schutzabdeckung das Werkstück von oben auf den Querschlitten treffen und hierdurch im Bereich des Sägeschlitzes spannen. Diese Spannfunktion kann durch alle Lamellen oder durch nur einige der Lamellen ausgeführt werden, insbesondere ist es bevorzugt, dass die Spannfunktion nur durch jede dritte, jede vierte, fünfte oder dergleichen Lamelle ausgeführt wird.

Die Erfindung wird nachstehend anhand eines Ausführungsbeispiels in Verbindung mit der beigefügten Zeichnung näher erläutert. Die bei der Beschreibung des Ausführungsbeispiels gegebenenfalls verwendeten Begriffe "oben", "unten", "links" und "rechts" beziehen sich auf die Figur in einer Ausrichtung mit normal lesbaren Bezugszeichen und Figurenbezeichnungen.

Es zeigen:
- Figur 1: eine perspektivische Seitenansicht einer erfindungsgemäßen Sägevorrichtung mit den Tischen;
- Figur 2: eine Draufsicht auf die Ausführungsform gemäß Figur 1;
- Figur 3: eine Draufsicht auf die Ausführungsform gemäß Figur 1 in einer anderen Anordnungsweise der Tische;
- Figur 4: eine Draufsicht auf eine zweite Ausführungsform mit zwei gekoppelten Tischen auf einer gemeinsamen Seite,
- Figur 5: eine Frontalsicht auf die zweite Ausführungsform mit zwei gekoppelten Tischen auf gegenüberliegenden Seiten, und
- Figur 6: eine perspektivische Seitenansicht einer dritten Ausführungsform der Erfindung mit einem Doppei-Lamellenvorhang als Schutzvorrichtung.

Eine erfindungsgemäße Sägevorrichtung 10 weist ein Maschinengrundgestell 50 an dem ein Sägeaggregat 60 verschieblich gelagert ist. Das Sägeaggregat 60 kann auch als eine beliebige Bearbeitungseinrichtung ausgeführt sein. Bei einer erfindungsgemäßen Sägevorrichtung 10 ist es üblicherweise als Hauptsägeaggregat mit einem Kreissägeblatt 61 ausgeführt.

Ferner weist die Sägevorrichtung 10 mindestens eine Maschinenauflage 51 auf, auf welcher ein Werkstück zur Ausführung eines Sägeschnitts aufgelegt und gegebenenfalls an eine Anschlagschiene oder -klappe zur Anlage gebracht werden und daran geführt werden kann. Das Hauptsägeblatt 61 ragt um einen gewissen Betrag über die Maschinenauflage 51 hinaus. Die Bewegungsrichtung des Sägeaggregats 60 definiert eine Vorschubachse VA, welche durch das Maschinengrundgestell 50 verläuft. Das Sägeaggregat 60 ist innerhalb des Maschinengrundgestells 50 gelagert. Das Sägeaggregat 60 weist ein Kreissägeblatt auf, welches um eine Rotationsachse R drehbar gelagert ist. Die Rotationsachse R ist senkrecht zu der Vorschubachse VA ausgerichtet und verläuft durch das Maschinengrundgestell 50, ist also unterhalb einer Maschinenauflage 51 angeordnet.

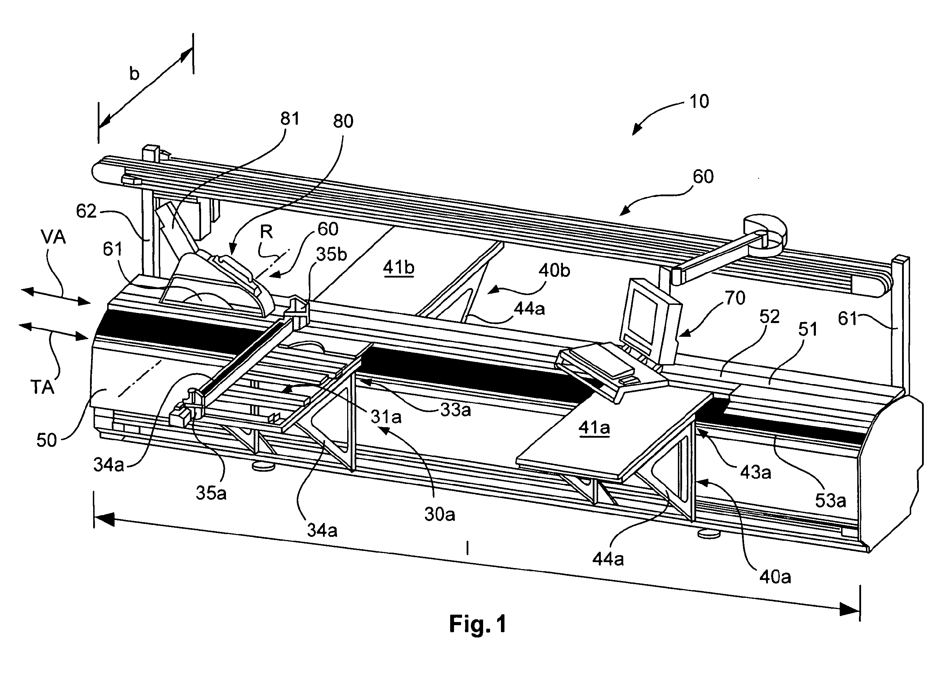

Figur 1 zeigt die erfindungsgemäße Sägevorrichtung 10 mit einem ersten Querschlitten 30a mit einer ersten Anschlagschiene 34a, einem ersten Auflagetisch 40a und einem zweiten Auflagetisch 40b. Diese Tische definieren jeweils Auflageflächen 41a, 41b. Die Maschinenauflage 51 ist durch einen Sägeschlitz 52 in zwei Teile unterteilt, und der Sägeschlitz 52 verläuft parallel zur Vorschubachse VA entlang des gesamten Maschinengrundgestells 50. An dem Maschinengrundgestell 50 sind der erste Querschlitten 30a und der erste Auflagetisch 40a an einer gleichen Seite gemeinsam angeordnet, der Auflagetisch 40b ist an einer gegenüberliegenden Seite angeordnet. Ein Werkstück kann nun vollständig oder teilweise auf den Querschlitten 30a aufgelegt werden und mittels der Anschlagsschiene 34aund/oder einer von zwei an der Anschlagschiene 53 a, b in deren Längsrichtung verschiebbaren Anschlagkappen 35 a, b ausgerichtet und zur Anlage gebracht werden.

Das Maschinengrundgestell 50 weist obere Aufnahmevorrichtungen 53 a, b auf, von denen die eine Aufnahmevorrichtung 53 a sichtbar ist. Die sichtbare Aufnahmevorrichtung 53 a in Fig. 1 ist dazu vorgesehen, den ersten Querschlitten 30 a aufzunehmen. Hierzu ist die Aufnahmevorrichtung 53 a als Linearführung ausgebildet, welche sich im Wesentlichen parallel zur Vorschubachse VA erstreckt und eine zur Verschubachse parallele Translationsachse TA definiert. Der Querschlitten 30 a und der Ablagetisch 40 a sind über die Linearführung in Translationsrichtung TA verschiebbar, wobei die Tische im Wesentlichen auf der Linearführung ruhen, insbesondere mittels an dem Tisch 30 a, 40 a, 40 b vorgesehenen Lineargleitlagerungen 33 a, 43 a, 43 b.

Die Tische 30 a, 40 a, 40 b werden über eine untere Abstützeinrichtung 54 a, b mittels jeweiligen Abstützstreben 34 a, 44 a, 44 b noch abgestützt und geführt. Die Abstützeinrichtung 54 a, b ist weit unterhalb von der Linearführung 53 a, b an dem Maschinengrundgestell 50 angeordnet, so dass zwischen einer oberen Aufnahmevorrichtung 53 a, b und einer unteren Abstützeinrichtung 54 a, b ein großer Stützhebel gebildet wird, über welchen die auf einen Tisch 30 a, 40 a, b wirkenden Kräfte gut in das Maschinengrundgestell 50 eingeleitet werden können.

Das Sägeaggregat 60 ist in dem Maschinengrundgestell 50 so gelagert, dass es um eine Schwenkachse schwenkbar ist, insbesondere in beiden Richtungen, wobei die Schwenkachse parallel zur Vorschubachse VA verläuft. Die hohe Flexibilität der erfindungsgemäßen Sägevorrichtung 10 ergibt sich unter anderem dadurch, dass sowohl das Sägeaggregat 60 als auch einen jeweiligen Querschlitten 30 a verfahrbar sind, manuell oder automatisch. Ferner wird die Flexibilität durch an dem Maschinengrundgestell angeordnete Auflagetische 40 a, b erhöht, welche auf dieselbe Art und Weise wie der Querschlitten 30a an dem Maschinengrundgestell 50 gekoppelt ist. Die Auflagetische 40 a, b weisen eine Ablagefläche 41 a, b auf, welche, wie auch die Auflagefläche 31 a mit der Maschinenauflage 51 fluchtend in einer horizontal liegenden Ebene angeordnet sind.

Es ist zu verstehen, dass die jeweiligen Tische 30 a, 40 a, b je nach Bearbeitungsaufgabe nicht alle unbedingt erforderlich sind. Sie sind nur dann erforderlich, wenn die Abmessungen eines zu bearbeitenden Werkstücks es erfordern oder wenn Ablageflächen für weiter zu verarbeitende Zwischenprodukte benötigt werden. Die Sägevorrichtung 10 kann also schmal ausgebildet sein, wenn erforderlich. Das Maschinengrundgestell 50 kann dadurch, wie dargestellt, ein großes Längen-Breiten-Verhältnis I:b aufweisen, z.B. im Bereich von 3 bis 4, was die Zugänglichkeit verbessert und Vorteile hinsichtlich des Platzbedarfs bieten.

Die dargestellte Sägevorrichtung 10 weist auch eine Brücke 160 auf, welche über Stützen 61, 62 mit dem Maschinengrundgestell 50 an dessen Stirnseiten verbunden ist, An der Brücke 60 ist eine Bedieneinheit 70 angeordnet, die oberhalb der Brücke 60 an einer Linearlagerung über einen Auslegerarm 71 gehalten ist und von einem Bediener entlang der Brücke mitgeführt werden kann. Ferner ist eine Schutzhaube 80 vorgesehen, welche unterhalb der Brücke 60 in einer Linearlagerung über einen Auslegerarm 81 gehalten ist und entlang der Brücke 60 mitgeführt werden kann. Hierdurch wird eine hohe Sicherheit und Sauberkeit sichergestellt.

Die Stützstreben 34 a, 44 a, b sind seitlich des Maschinengrundgestells an den im Wesentlichen vertikal verlaufenden Seiten bzw. Kanten angeordnet. Die Stützstreben sind an dem Tisch befestigt und als dreieckige Stützelemente ausgebildet. Jeder Tisch wird durch zwei Stützstreben an der unteren Abstützvorrichtung abgestützt. Erfingdungsgemäß sind die Aufnahmevorrichtungen 53 a, b und Abstützeinrichtungen 54 a, b beidseitig an dem Maschinengrundgestell und symmetrisch zueinander ausgebildet. Somit kann eine jeweiliger Tisch 30 a 40 a, b an beiden Seiten wahlweise angeordnet werden. Weist ein Querschlitten 30 a, b dabei eine Anschlagschiene 34 a, b auf, so ergibt sich bei einem Umsetzen von der einen auf die andere Seite eine asymmetrische Anordnung des jeweiligen Querschlittens 30 a, b gegenüber der Anordnung auf der anderen Seite. Dies kann durch ein Versetzen der Anschlagschiene und ggf. ein Verschwenken der gesamten Anschlagschiene um ihre Hochachse oder ein Verschwenken der Anschlagklappen um eine horizontale Ache wieder aufgehoben werden.

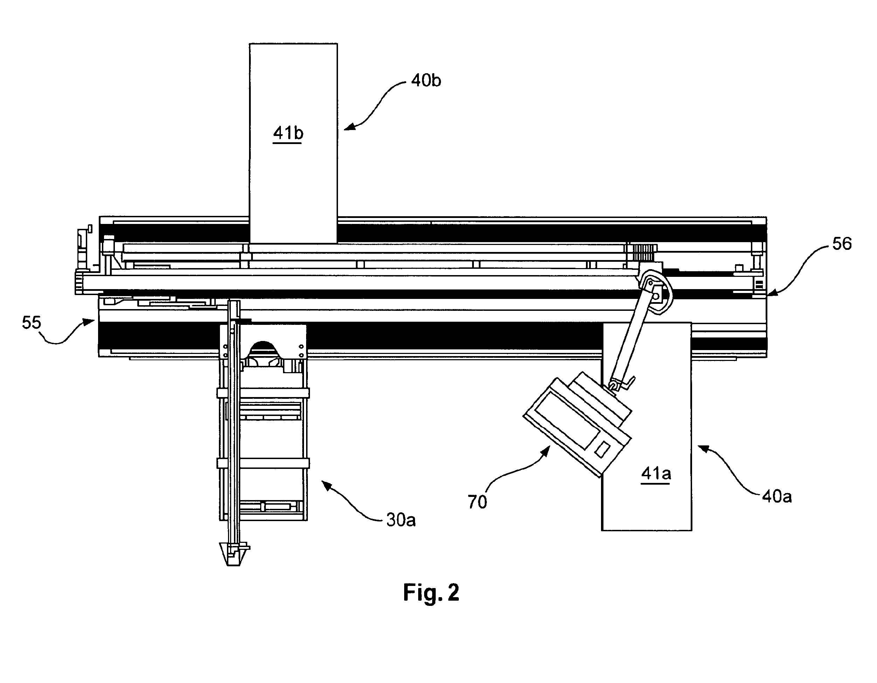

Figur 2 zeigt eine Draufsicht auf die in Figur 1 dargestellte Konfiguration. Wie ersichtlich sind die Ablagetische 41 a, b beidseits des Maschinengrundgestells 50 angeordnet. Der Querschlitten 30a liegt auf der gleichen Seite wie der Ablagetisch 41 a und ist etwa gegenüberliegend zum Auflagetisch 41 b positioniert.

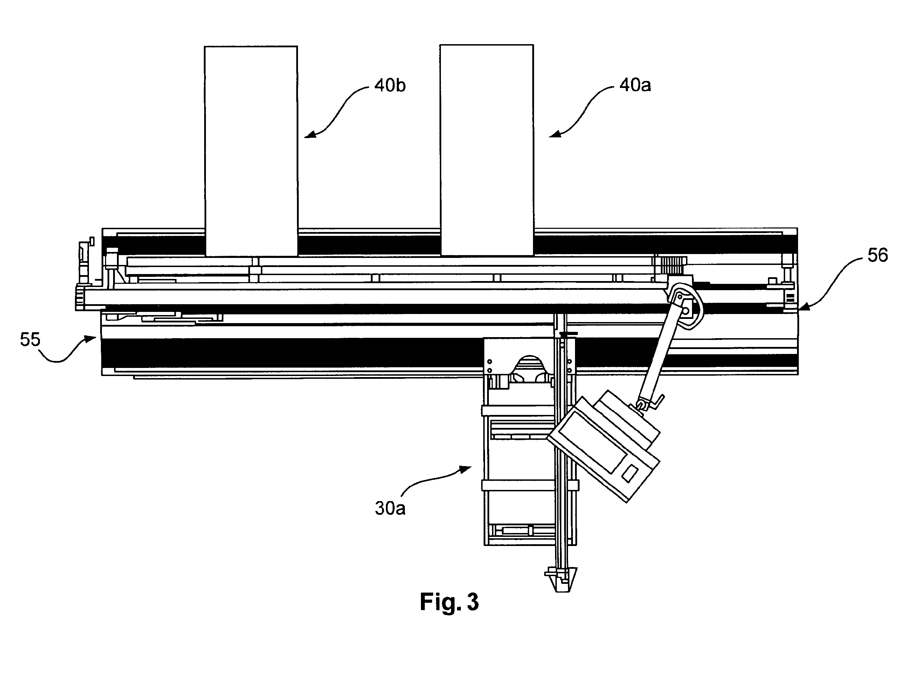

Figur 3 zeigt eine andere Konfiguration der erfindungsgemäßen Sägevorrichtung und in dieser Konfiguration ist der Auflagetisch 41 a von der Seite des Querschlittens 30 a demontiert worden und auf der gegenüberliegenden Seite montiert worden. Auf diese Weise liegen die beiden Auflagetische 41 a, b auf der gleichen Seite und gegenüberliegend zu dem Querschlitten 30 a. Diese Anordnung bietet insbesondere den Vorteil, dass der Querschlitten 30 a über die gesamte Länge des Maschinengrundgestells verschoben werden kann und folglich besonders lange Sägeschnitte ausgeführt werden können.

Während in Figur 2 die Anschlagschiene 34 a auf der zum Sägeaggregat 30 weisenden Seite des Querschlittens angeordnet ist, ist in der Konfiguration gemäß Figur 3 die Anschlagschiene 34 umgesetzt worden und liegt auf der vom Sägeaggregat 30 abgewandten Seite des Querschlittens 30 a. Die Positionierung der Anschlagschiene 34 gemäß Figur 2 ermöglicht es somit, dass der Benutzer ein Werkstück aktiv gegen die Anschlagschiene drückt und gegen die Kraft, die das Sägeaggregat auf das Werkstück beim Schnitt ausübt, gegen die Anschlagschiene anliegend hält. Die in Figur 3 gezeigte Konfiguration hat hingegen zur Folge, dass die Kraft, die das Sägeaggregat 30 beim Schnitt auf das Werkstück ausübt, dieses gegen die Anschlagschiene drückt, sodass der Benutzer lediglich dafür Sorge tragen muss, dass das Werkstück nicht verkantet, d. h. teilweise lokal von der Anschlagschiene abhebt.

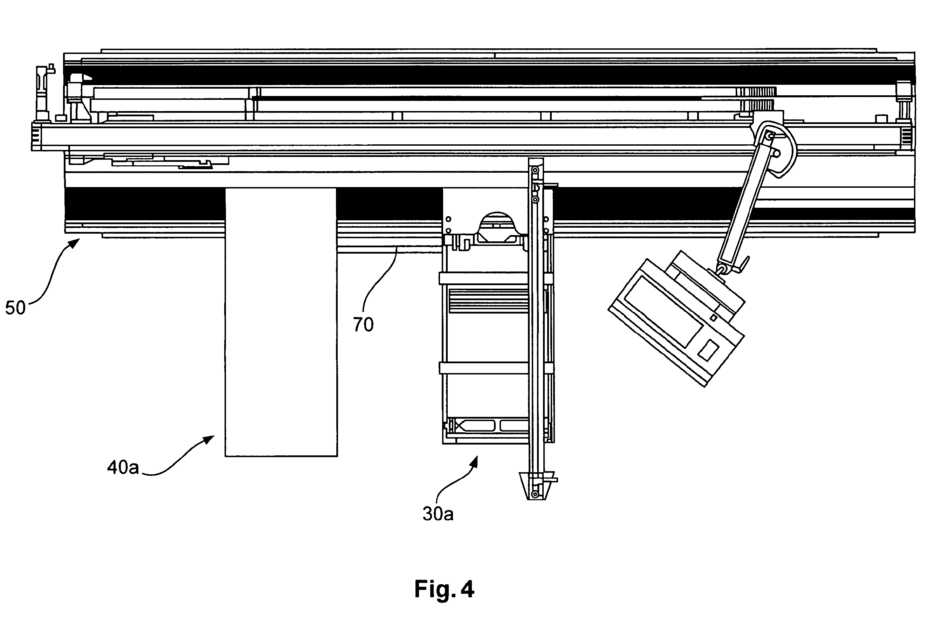

Figur 4 zeigt eine dritte Konfiguration der erfindungsgemäßen Sägevorrichtung. Bei dieser Konfiguration ist der Auflagetisch 40 b demontiert und der Auflagetisch 40 a ist zwischen Sägeaggregat 30 und Werkstückauflage 30a montiert. Die Anschlagschiene 34a ist in gleicher Weise an dem Querschlitten 30a montiert wie bei der vorhergehenden Konfiguration in Figur 3. Die in Figur 4 gezeigte Konfiguration kann insbesondere dazu dienen, um große und weit seitlich ausladende Werkstücke bearbeiten zu können. In diesem Fall kann das Werkstück sowohl auf dem Auflagetisch 40a als auch auf dem Querschlitten 30a abgestützt werden und folglich weitestgehend verformungsfrei gesägt werden. In Figur 4 ist insbesondere auch eine Kopplung zwischen dem Auflagetisch 40 a und dem Querschlitten 30 a mittels einer Kopplungsstange 70 vorgesehen. Die Kopplungsstange erstreckt sich parallel zum Sägeschlitz und benachbart zum Maschinengestell 50 und ist an ihren beiden Enden mit dem Querschlitten 30a einerseits und dem Auflagetisch 40a andererseits gekoppelt Durch diese Kopplung wird erreicht, dass sich der Auflagetisch 40 a und der Querschlitten 30a synchron entlang der Linearführung 53 a, 54 a bewegen und somit das auf Ihnen abgelegte Werkstück relativ zum Maschinengrundgestell bewegt werden kann, ohne dass hierbei eine Relativbewegung zwischen den Auflageflächen 31 a, 41 a und dem Werkstück auftritt.

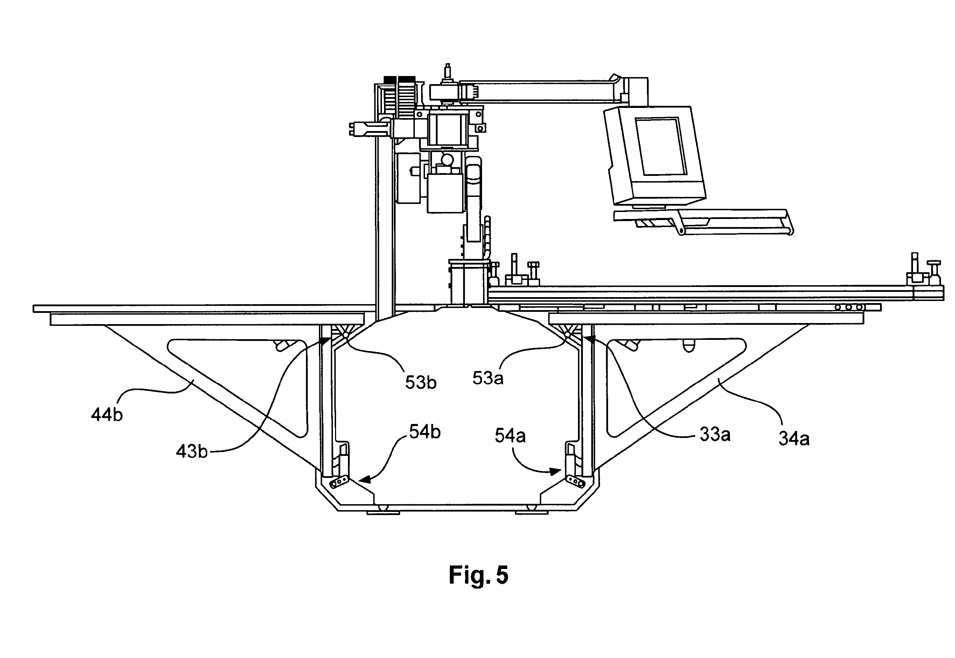

Figur 5 zeigt eine Frontalansicht der erfindungsgemäßen Sägevorrichtung, aus welcher die Anordnung und Konstruktion der Abstützstreben 44 b, 34 a und deren lineare Gleitlagerung an den Aufnahmevorrichtungen 53 a, b 54 a, b hervorgeht.

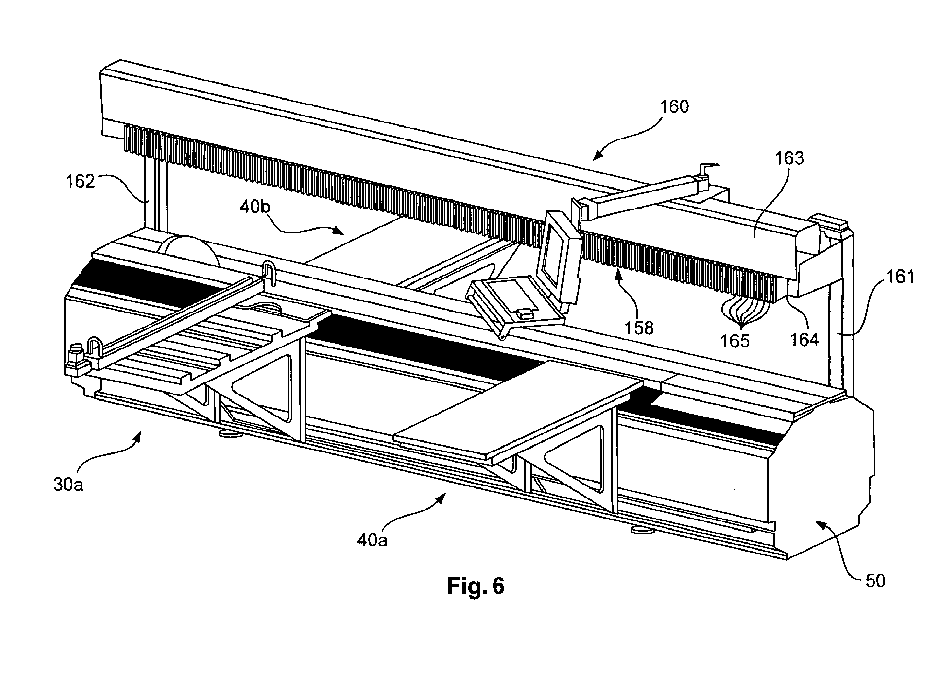

Figur 6 zeigt eine dritte Ausführungsform der Erfindung. Diese Ausführungsform unterscheidet sich hinsichtlich des Maschinengrundgestells 50 mit darin angeordnetem Sägeaggregat, des Querschlittens 30 a und der Auflagetische 40 a, b mit ihren entsprechenden Aufnahmevorrichtungen nicht von der in Figur 1 dargestellten Ausführungsform.

Die in Figur 6 dargestellte Ausführungsform weit jedoch im Unterschied zu den voranstehend erläuterten Ausführungsformen eine Brücke 160 auf, an der ein Doppel-Lamellenvorhang 158 angeordnet ist. Die Brücke 160 ist an zwei Vertikalstreben 161, 162 befestigt. Sie erstreckt sich oberhalb und in Längsrichtung des Sägeschlitzes 52.

Der Doppel-Lamellenvorhang 158 ist an einem im Querschnitt U-förmigen Blechprofil 163 befestigt, welches oberhalb und nach unten offen an einer Längsstrebe 164 angeordnet ist. Das Blechprofil 163 ist vertikal verschieblich in Bezug auf das Längsprofil 164 daran gelagert.

An jedem der beiden Schenkelenden des Blechprofils 163 ist eine Vielzahl von Lamellen 165 befestigt. Jede Lamelle ist solcherart beweglich an dem Blechprofil befestigt, dass sich ihre Lamellenunterkante in Bezug auf das Blechprofil anheben kann. Auf diese Weise kann der durch die Lamellen gebildete Lamellenvorhang den Sägeschlitz und ein daran hindurch laufendes Sägeblatt beidseits zuverlässig abdecken und zwar sowohl im Bereich eines aufliegenden Werkstücks als auch unmittelbar neben einem solchen Werkstück, indem die Unterkanten der Lamellen entsprechend auf dem Werkstück bzw. der Maschinenauflage aufliegen.

Die Erfindung wurde vorstehend anhand von Ausführungsbeispielen näher erläutert. Für den auf diesem Gebiet tätigen Fachmann ist es jedoch selbstverständlich, dass die Ausgestaltung der vorliegenden Erfindung gemäß der vorstehend beschriebenen Figur und den für die jeweiligen Bauteile und Komponenten verwendeten Bezugszeichen in den Figuren und der Beschreibung sowie die beispielhaften Angaben nicht einschränkend auszulegen sind. Auch können die in der Figur gewählten Proportionen schematisch oder vereinfacht dargestellt sein, beispielsweise zwecks besserem Verständnis. Die Erfindung ist somit nicht auf die angegebenen Darstellungen beschränkt.

## Patentansprüche

1. Sägevorrichtung (10) umfassend:
- ein Maschinengrundgestell (50),
- eine an dem Maschinengrundgestell (50) feststehend angeordnete Maschinenauflage (36) zum Auflegen eines Werkstücks und
- eine erste Werkstückauflage (30a), welche eine Auflageflache (31a) für ein Werkstück aufweist,
- ein Sägeaggregat (61), welches eine um eine unterhalb der Maschinenauflage (36) angeordnete Rotationsachse (R) rotierbar gelagerte Sägeblattaufnahme aufweist und entlang einer Vorschubachse (VA) verfahrbar ist,
- einen Sägeaggregat-Aktuator, der mit dem Sägeaggregat (61) gekoppelt ist für eine Bewegung des Sägeaggregats (61) relativ zum Maschinengrundgestell entlang der Vorschubachse (VA),
- die erste Werkstückauflage (30 a) als Querschlitten ausgebildet ist und eine Kopplungsvorrichtung aufweist, mittels derer sie mit einer am Maschinengrundgestell (50) angeordneten Aufnahmevorrichtung (51) verbindbar ist,
**dadurch gekennzeichnet, dass**
- das Maschinengrundgestell (50) beidseits der Vorschubachse (VA) jeweils mindestens eine zu der Vorschubachse (VA) parallel ausgerichtete Aufnahmevorrichtung (53 a, b) aufweist, und
- der mindestens ein Querschlitten (30a) und/oder mindestens ein Auflagetisch (51) eine Kopplungsvorrichtung aufweisen, die ausgebildet ist, an einer beliebigen der beiden Aufnahmevorrichtungen (53 a, b) an dem Maschinengrundgestell (50) angekoppelt zu werden.

2. Sägevorrichtung nach Anspruch 1,
**dadurch gekennzeichnet, dass**
- dass der Querschlitten (30a) entlang einer parallel zur Vorschubachse angeordneten Translationsachse (TA) beweglich ist, und
- dass das Sägeaggregat (61) und der Querschlitten (30 a) so an dem Maschinengrundgestell (50) angeordnet sind, dass sie unabhängig voneinander und aneinander vorbei bewegt werden können.

3. Sägevorrichtung nach Anspruch 2, **gekennzeichnet durch**
- einen Querschlitten-Aktuator, der an dem Maschinengrundgestell (50) angeordnet und mit dem Querschlitten (30 a) gekoppelt ist für eine Bewegung des Querschlittens (30 a) entlang der Translationsachse (TA).

4. Sägevorrichtung nach einem der vorhergehenden Ansprüche, **gekennzeichnet durch** eine Schnittführungs-Steuerungsvorrichtung (301), welche mit dem Sägeaggregat-Aktuator und gfs. dem Querschlitten-Aktuator signaltechnisch gekoppelt ist und ausgebildet ist, um den Sägeaggregat-Aktuator in Abhängigkeit der Position des Querschlittens anzusteuern und gfs. den Querschlitten-Aktuator solcherart anzusteuern, dass das Sägeaggregat (61) und der Querschlitten (30 a) gleichzeitig in entgegengesetzter Richtung zueinander verfahren werden.

5. Sägevorrichtung nach einem der vorhergehenden Ansprüche, **gekennzeichnet durch** einen Auflagetisch (52), der an dem Maschinengrundgestell (50) befestigbar ist und mittels einer an dem Auflagetisch (52) bereitgestellten Kopplungsvorrichtung an der am Maschinengrundgestell (50) bereitgestellten Aufnahmevorrichtung (51) befestigbar ist.

6. Sägevorrichtung nach einem der vorhergehenden Ansprüche, **dadurch gekennzeichnet, dass** die Rotationsachse (R) in einer ersten Ausrichtung parallel zur Auflagefläche (31) verläuft und in einer Ebene (SE) aus dieser ersten Ausrichtung in zwei entgegengesetzte Richtungen schwenkbar um eine Schwenkachse gelagert ist, wobei die Ebene (SE) im Wesentlichen orthogonal zu der Auflagefläche (31) und orthogonal zu der Vorschubrichtung (V) verläuft und ortsfest zum Sägeaggregat (61) ist.

7. Sägevorrichtung nach einem der vorhergehenden Anspruche, **dadurch gekennzeichnet, dass** die Sägeblattaufnahme mit einer Sägewelle verbunden ist, welche drehbar um die Rotationsachse (R) mittels mindestens eines Rotationslagers an einem Vorschubschlitten gelagert ist, der in Vorschubrichtung (V) mittels eines Linearlagers linear verschiebbar an dem Maschinengrundgestell (50) gelagert ist, welches unterhalb der Maschinenauflage (51) und parallel zu Translationsrichtung (T) und der Erstreckungsrichtung einer gegebenenfalls vorhandenen Aufnahmevorrichtung (51) verläuft.

8. Sägevorrichtung nach einem der vorhergehenden Ansprüche, **dadurch gekennzeichnet, dass** das Sägeaggregat (61) ein Vorritzaggregat aufweist, welches zur Ausführung eines Schnitts oder Einschnitts in Schnittrichtung vor der Sägeblattaufnahme angeordnet ist und vorzugsweise an dem Sägeaggregat (61) befestigt ist.

9. Sägevorrichtung nach dem vorhergehenden Anspruch 8, **dadurch gekennzeichnet, dass** das Vorritzaggregat ein erstes und ein zweites Sägeblatt aufweist, welche konzentrisch zueinander angeordnet sind, und in ihrer axialen Lage relativ zueinander verschiebbar sind und so an die Abmessungen eines an der Sägeblattaufnahme befestigten Hauptsägeblatts (61), insbesondere an dessen Breite anpassbar sind.

10. Sägevorrichtung nach einem der vorhergehenden Ansprüche , **dadurch gekennzeichnet, dass** die Auflageflache (51) eine Glasauflage zur schonenden Aufnahme eines Werkstücks umfasst.

11. Sägevorrichtung nach einem der vorhergehenden Ansprüche, **dadurch gekennzeichnet, dass** der Querschlitten (30 a) auf dem Maschinengrundgestell (50) in mehreren definierten und in Richtung der Translationsachse (TA) voneinander beabstandeten Positionen arretierbar ist und um diese definierten Positionen in einem vorbestimmten Bereich entlang der Translationsachse verschiebbar gelagert ist.

12. Sägevorrichtung nach einem der vorhergehenden Anspruche, **gekennzeichnet durch** einen zweiten Querschlitten (30 b) mit einer zweiten Auflagefläche (31 b) mit einer Kopplungsvorrichtung, welche von dem Querschlitten (30 a) beabstandet an der Aufnahmevorrichtung (53 a, b) an dem Maschinengrundgestell (50) angekoppelt ist, und **durch** eine Kopplungseinheit, welche dazu ausgebildet ist, die erste und die zweite Auflageflache (31 a, 31 b) derart miteinander mechanisch oder steuerungstechnisch zu koppeln, dass deren Bewegung synchron entlang der Translationsachse (TA) erfolgt.

13. Sägevorrichtung nach einem der vorhergehenden Ansprüche, **dadurch gekennzeichnet, dass** die Sägeblattaufnahme zwischen einer Arbeitsstellung und einer abgesenkten Sicherheitsstellung vertikal bewegbar an dem Sägeaggregat gelagert ist.

14. Sägevorrichtung nach einem der vorhergehenden Ansprüche, **gekennzeichnet durch**
- eine am Maschinengestell befestigte Brücke (60), die sich im Bereich oberhalb des Sägeschlitzes in dessen Richtung erstreckt
- eine Schutzvorrichtung (80), welche oberhalb des Sägeschlitzes angeordnet ist und beweglich an der Brücke (60 gelagert ist,
- einen Schutzvorrichtungs-Aktuator, der mit der Schutzvorrichtung (80) gekoppelt ist für eine Bewegung der Schutzhaube (80) in Bezug auf die Brücke (60), und
- eine Schutzvorrichtungs-Steuerungsvorrichtung (501), welche signaltechnisch mit dem Schutzvorrichtungs-Aktuator und dem Sägeaggregat-Aktuator gekoppelt ist und ausgebildet ist, um den SchutzvorrichtungsAktuator und den Sägeaggregat-Aktuator solcherart anzusteuern, dass sich das Sägeaggregat (61) nur dann entlang der Vorschubrichtung (V) bewegen lässt, wenn die Schutzvorrichtung (80) in eine solche Position bewegt ist, dass sie verletzungsgefährliche Teile am Sägeaggregat abdeckt.

15. Sägevorrichtung nach Anspruch 14, **dadurch gekennzeichnet, dass**
- die Schutzvorrichtung eine Schutzhaube (80) ist, welche oberhalb des Sägeschlitzes angeordnet ist und verschiebbar an der Brücke (60) gelagert ist,
- der Schutzvorrichtungs-Aktuator ein Schutzhauben-Aktuator ist, der mit der Schutzhaube (58) gekoppelt ist für eine Verschiebung der Schutzhaube (58) entlang der Brücke (55) in Richtung der Vorschubachse (VA), und
- die Schutzvorrichtungs-Steuerungsvorrichtung eine Schutzhauben-Steuerungsvorrichtung (501) ist, welche signaltechnisch mit dem Schutzhauben-Aktuator und dem Sägeaggregat-Aktuator gekoppelt ist und ausgebildet ist, um den Schutzhauben-Aktuator und den Sägeaggregat-Aktuator solcherart anzusteuern, dass sich Schutzhaube (80) und Sägeaggregat (60) synchron entlang der Vorschubrichtung (V) bewegen und die Schutzhaube (80) stets relativ zur Rotationsachse in einer konstanten horizontalen Position oberhalb und in Bezug auf die Rotationsachse (R) der Sägeblattaufnahme positioniert ist
wobei weiter vorzugsweise die Schutzhaube (80) an der Brücke (60) vertikal beweglich gelagert ist und weiterhin **gekennzeichnet durch** eine Kopplungseinheit, welche ausgebildet ist, um eine vertikale Bewegung der Sägewelle mit einer vertikalen Bewegung der Schutzhaube solcherart zu koppeln, dass die Schutzhaube abgesenkt wird, wenn die Sägewelle angehoben wird, und umgekehrt.

16. Sägevorrichtung nach Anspruch 14, **dadurch gekennzeichnet, dass**
- die Schutzvorrichtung ein Doppel-Lamellenvorhang (158) ist, welcher oberhalb des Sägeschlitzes angeordnet ist, sich in Brückenlängsrichtung beidseits zum Sägeschlitz erstreckt und an der Brücke (155) vertikal beweglich gelagert ist,
- der Schutzvorrichtungs-Aktuator ein Lamellenvorhangs-Aktuator ist, der mit dem Doppel-Lamellenvorhang (158) gekoppelt ist für eine Bewegung des Doppel-Lamellenvorhang (158) in vertikaler Richtung, und
- die Schutzvorrichtungs-Steuerungsvorrichtung eine Doppel-Lamellenvorhang-Steuerungsvorrichtung (1501) ist, welche signaltechnisch mit dem Lamellenvorhangs-Aktuator und dem Sägeaggregat-Aktuator gekoppelt ist und ausgebildet ist, um den Lamellenvorhangs-Aktuator und den Sägeaggregat-Aktuator solcherart anzusteuern, dass sich das Sägeaggregat (61) nur dann entlang der Vorschubrichtung (V) bewegen lässt, wenn der Doppel-Lamellenvorhang (158) in eine abgesenkte Position bewegt ist, so dass er verletzungsgefährliche Teile am Sägeaggregat abdeckt.

## Claims

1. Saw device (10) comprising:
- a machine base frame (50),
- a machine support (36) fixedly disposed on the machine base frame (50) for positioning a workpiece and
- a first workpiece support (30a) having a support surface (31a) for a workpiece,
- a saw unit (61) comprising a saw blade holder which is mounted so as to be rotatable about an axis of rotation (R) disposed underneath the machine support (36) and displaceable along a feed axis (VA),
- a saw unit actuator, which is coupled with the saw unit (61) to enable a movement of the saw unit (61) relative to the machine base frame along the feed axis (VA),
- the first workpiece support (30a) being provided in the form of a cross slider and having a coupling device by means of which it can be connected to a holder device (51) disposed on the machine base frame (50), **characterised in that**
- the machine base frame (50) has at least one holder device (53 a, b) respectively on either side of the feed axis (VA) oriented parallel with the feed axis (VA), and
- the at least one cross slider (30a) and/or at least one support table (51) has a coupling device which is designed to be coupled with any one of the two holder devices (53 a, b) on the machine base frame (50).

2. Saw device as claimed in claim 1,
**characterised in that**
- the cross slider (30a) is able move along an axis of translation (TA) disposed parallel with the feed axis, and
- the saw unit (61) and the cross slider (30 a) are disposed on the machine base frame (50) so that they can be moved independently of one another and past one another.

3. Saw device as claimed in claim 2, **characterised by**
- a cross slider actuator which is disposed on the machine base frame (50) and is coupled with the cross slider (30 a) to enable a movement of the cross slider (30 a) along the axis of translation (TA).

4. Saw device as claimed in one of the preceding claims, **characterised by** a cut-guiding control device (301) which is coupled with the saw unit actuator and optionally the cross slider actuator by signal transmission and is configured to actuate the saw unit actuator and optionally the cross slider actuator, depending on the position of the cross slider, in such a way that the saw unit (61) and the cross slider (30 a) are simultaneously moved in the opposite direction from one another.

5. Saw device as claimed in one of the preceding claims, **characterised by** a support table (52) which can be secured to the machine base frame (50) and can be secured by means of a coupling device disposed on the machine support table (52) to the holder device (51) disposed on the machine base frame (50).

6. Saw device as claimed in one of the preceding claims, **characterised in that** the axis of rotation (R) extends in a first orientation parallel with the support surface (31) and is mounted so as to be pivotable about a pivot axis in two opposite directions out of this first orientation in a plane (SE), and the plane (SE) extends substantially orthogonally to the support surface (31) and orthogonally to the feed direction (V) and is stationary with respect to the saw unit (61).

7. Saw device as claimed in one of the preceding claims, **characterised in that** the saw blade holder is connected to a saw shaft which is mounted so as to be rotatable about the axis of rotation (R) by means of at least one rotary bearing on a feed slider which is mounted so as to be linearly displaceable on the machine base frame (50) in the feed direction (V) by means of a linear bearing extending underneath the machine support (51) and parallel with the direction of translation (T) and the extension of an optionally provided holder device (51).

8. Saw device as claimed in one of the preceding claims, **characterised in that** the saw unit (61) has a pre-scoring unit for making a cut or groove which is disposed in front of the saw blade unit in the cutting direction and preferably secured to the saw unit (61).

9. Saw device as claimed in preceding claim 8, **characterised in that** the pre-scoring unit comprises a first and a second saw blade which are disposed concentrically with one another and are displaceable relative to one another in terms of their axial position so as to be adaptable to the dimensions of a main saw blade (61) attached to the saw blade holder, in particular to the width thereof.

10. Saw device as claimed in one of the preceding claims, **characterised in that** the support surface (51) comprises a glass support to provide a gentle support for a workpiece.

11. Saw device as claimed in one of the preceding claims, **characterised in that** the cross slider (30 a) can be locked on the machine base frame (50) in several defined positions spaced apart from one another in the direction of the axis of translation (TA) and is mounted so as to be displaceable along the axis of translation within a predefined range around these defined positions.

12. Saw device as claimed in one of the preceding claims, **characterised by** a second cross slider (30 b) with a second support surface (31 b) having a coupling device which is coupled with the holder device (53 a, b) on the machine base frame (50) at a distance apart from the cross slider (30 a), and by a coupling unit which is designed to couple the first and the second support surfaces (31 a, 31 b) with one another on a mechanical or automatically controlled basis in such a way that their movement along the axis of translation (TA) is synchronous.

13. Saw device as claimed in one of the preceding claims, **characterised in that** the saw blade holder is mounted so as to be vertically displaceable on the saw unit between an operating position and a lowered safety position.

14. Saw device as claimed in one of the preceding claims, **characterised by**
- a bridge (60) secured to the machine frame extending in the region above the saw kerf in the direction thereof,
- a guard device (80) which is disposed above the saw kerf and is mounted so as to move on the bridge (60),
- a guard device actuator coupled with the guard device (80) to enable a movement of the guard hood (80) relative to the bridge (60), and
- a guard device control device (501) which is coupled with the guard device actuator and the saw unit actuator by signal transmission and is configured to actuate the guard device actuator and saw device actuator in such a way that the saw unit (61) is only able to move along the feed direction (V) if the guard device (80) is in a position in which parts on the saw unit posing a risk of injury are covered.

15. Saw device as claimed in claim 14, **characterised in that**
- the guard device is a guard hood (80) which is disposed above the saw kerf and is mounted so as to be displaceable on the bridge (60),
- the guard device actuator is a guard hood actuator which is coupled with the guard hood (58) to enable a translating movement of the guard hood (58) along the bridge (55) in the direction of the feed axis (VA), and
- the guard device control device is a guard hood control device (501) which is coupled with the guard hood actuator and the saw unit actuator by signal transmission and is configured to actuate the guard hood actuator and saw unit actuator in such a way that the guard hood (80) and saw unit (60) move synchronously along the feed direction (V) and the guard hood (80) is always in a constant horizontal position relative to the axis of rotation and is positioned relative to the axis of rotation (R) of the saw blade holder
and even more preferably, the guard hood (80) is mounted so as to move vertically on the bridge (60) and is further **characterised by** a coupling unit which is configured to couple a vertical movement of the saw shaft with a vertical movement of the guard hood in such a way that the guard hood is lowered when the saw shaft is raised and vice versa.

16. Saw device as claimed in claim 14, **characterised in that**
- the guard device is a double slatted curtain (158) which is disposed above the saw kerf, extends in the bridge longitudinal direction on either side of the saw kerf and is mounted so as to move vertically on the bridge (155),
- the guard device actuator is a slatted curtain actuator which is coupled with the double slatted curtain (158) to enable a movement of the double slatted curtain (158) in the vertical direction, and
- the guard device control device is a double slatted curtain control device (1501) which is coupled with the slatted curtain actuator and saw unit actuator by signal transmission and is configured to actuate the slatted curtain actuator and saw unit actuator in such a way that the saw unit (61) is only able to move along the feed direction (V) if the double slatted curtain (158) is in a lowered position so that parts on the saw unit posing a risk of injury are covered.

## Revendications

1. Dispositif de sciage (10) comportant :
- un châssis de base (50),
- un plateau de machine (36), disposé de manière fixe sur le châssis de base (50) et destiné à recevoir une pièce à usiner, et
- un premier support de pièce (30a), qui comporte un plan d'appui (31a) pour une pièce à usiner,
- un groupe de sciage (61) qui comporte un logement de lame de scie, monté de manière rotative autour d'un axe de rotation (R) disposé au-dessous du plateau de machine (36), et qui peut être déplacé le long d'un axe d'avance (VA),
- un actionneur du groupe de sciage qui est couplé au groupe de sciage (61) pour un déplacement du groupe de sciage (61) par rapport au châssis de base de la machine le long de l'axe d'avance (VA),
- le premier support de pièce (30a) est réalisé sous forme de chariot transversal et comporte un dispositif de couplage, par lequel il peut être relié à un dispositif de réception (51) disposé sur le châssis de base (50) de la machine, **caractérisé en ce que**
- le châssis de base (50) de la machine comporte de part et d'autre de l'axe d'avance (VA) respectivement au moins un dispositif de réception (53a, b) disposé parallèlement à l'axe d'avance (VA), et
- ledit au moins un chariot transversal (30a) et/ou au moins une table de support (51) comportent un dispositif de couplage qui est configuré pour être couplé à l'un quelconque des deux dispositifs de réception (53a, b) sur le châssis de base (50) de la machine.

2. Dispositif de sciage selon la revendication 1, **caractérisé**
- **en ce que** le chariot transversal (30a) est mobile le long d'un axe de translation (TA) parallèle à l'axe d'avance, et
- **en ce que** le groupe de sciage (61) et le chariot transversal (30a) sont disposés sur le châssis de base (50) de la machine de telle sorte qu'ils peuvent être déplacés indépendamment l'un de l'autre et le long de l'un et l'autre.

3. Dispositif de sciage selon la revendication 2, **caractérisé par**
- un actionneur de chariot transversal qui est disposé sur le châssis de base (50) de la machine et est couplé au chariot transversal (30a) pour un déplacement du chariot transversal (30a) le long de l'axe de translation (TA).

4. Dispositif de sciage selon l'une quelconque des revendications précédentes, **caractérisé par** un dispositif de commande de la voie de coupe (301), qui est couplé par la technique des signaux à l'actionneur du groupe de sciage et, le cas échéant, à l'actionneur du chariot transversal, et qui est configuré pour commander l'actionneur du groupe de sciage en fonction de la position du chariot transversal et, le cas échéant, pour commander l'actionneur du chariot transversal de telle sorte que le groupe de sciage (61) et le chariot transversal (30a) peuvent être déplacés en même temps l'un par rapport à l'autre dans une direction opposée.

5. Dispositif de sciage selon l'une quelconque des revendications précédentes, **caractérisé par** une table de support (52) qui peut être fixée au châssis de base (50) de la machine et qui, au moyen d'un dispositif de couplage mis à disposition sur la table de support (52), peut être fixée au dispositif de réception (51) mis à disposition sur le châssis de base (50) de la machine

6. Dispositif de sciage selon l'une quelconque des revendications précédentes, **caractérisé en ce que** l'axe de rotation (R), dans une première orientation, est parallèle à la surface d'appui (31) et est monté dans un plan (SE) de manière à pouvoir pivoter autour d'un axe de pivotement dans deux directions opposées à partir de cette première orientation, ledit plan (SE) étant sensiblement orthogonal à la surface d'appui (31) et orthogonal au sens d'avance (V) et étant fixe par rapport au groupe de sciage (61).

7. Dispositif de sciage selon l'une quelconque des revendications précédentes, **caractérisé en ce que** le logement de lame de scie est relié à un arbre de scie, qui est monté, de manière à pouvoir tourner autour de l'axe de rotation (R) au moyen d'au moins un palier de rotation, sur un chariot d'avance qui est monté de manière mobile linéairement sur le châssis de base (50) de la machine dans le sens d'avance (V) au moyen d'un palier linéaire, qui s'étend au-dessous du support de machine (51) et parallèlement au sens de translation (T) et au sens d'extension d'un dispositif de réception (51) éventuellement présent.

8. Dispositif de sciage selon l'une quelconque des revendications précédentes, **caractérisé en ce que** le groupe de sciage (61) comporte un groupe d'ébauche de coupe qui, pour la réalisation d'une coupe ou d'une encoche, est disposé, par référence au sens de coupe, en amont du logement de lame de scie et est fixé de préférence au groupe de sciage (61).

9. Dispositif de sciage selon la revendication précédente 8, **caractérisé en ce que** le groupe d'ébauche de coupe comporte une première et une deuxième lame de scie qui sont disposées concentriquement l'une par rapport à l'autre et, dans leur position axiale, peuvent être déplacées relativement l'une par rapport à l'autre et peuvent être ajustées ainsi aux dimensions d'une lame de scie principale (61), en particulier à la largeur de celle-ci, fixée sur le logement de lame de scie.

10. Dispositif de sciage selon l'une quelconque des revendications précédentes, **caractérisé en ce que** le plan d'appui (51) comporte un appui en verre pour recevoir avec ménagements une pièce à usiner.

11. Dispositif de sciage selon l'une quelconque des revendications précédentes, **caractérisé en ce que** le chariot transversal (30a) peut être arrêté sur le châssis de base (50) de la machine dans plusieurs positions définies et écartées les unes des autres dans la direction de l'axe de translation (TA) et peut être monté mobile autour de ces positions définies dans une zone prédéterminée le long de l'axe de translation.

12. Dispositif de sciage selon l'une quelconque des revendications précédentes, **caractérisé par** un deuxième chariot transversal (30b) avec une deuxième surface d'appui (31b) avec un dispositif de couplage qui, à distance du chariot transversal (30a), est couplé au dispositif de réception (53a, b) sur le châssis de base (50) de la machine, et par une unité de couplage qui est configurée pour coupler le premier et le deuxième plan d'appui (31a, 31b) l'un à l'autre mécaniquement ou par la technique de commande de telle sorte que leur déplacement s'effectue de manière synchrone le long de l'axe de translation (TA).

13. Dispositif de sciage selon l'une quelconque des revendications précédentes, **caractérisé en ce que** le logement de lame de scie est monté sur le groupe de sciage de manière mobile verticalement entre une position de travail et une position de sécurité abaissée.

14. Dispositif de sciage selon l'une quelconque des revendications précédentes, **caractérisé par**
- un pont (60), qui est fixé sur le bâti de la machine et s'étend dans la zone au-dessus de la voie de scie dans la direction de celle-ci,
- un dispositif de protection (80), qui est disposé au-dessus de la voie de scie et est monté mobile sur le pont (60),
- un actionneur du dispositif de protection, qui est couplé au dispositif de protection (80) pour un déplacement de la hotte de sécurité (80) par rapport au pont (60), et
- un dispositif de commande du dispositif de protection (501) qui est couplé, par la technique des signaux, à l'actionneur du dispositif de protection et à l'actionneur du groupe de sciage et est configuré pour commander l'actionneur du dispositif de protection et l'actionneur du groupe de sciage de telle sorte que le groupe de sciage (61) ne se laisse déplacer le long du sens d'avance (V) que lorsque le dispositif de protection (80) est déplacé dans une position telle qu'il recouvre les parties du groupe de sciage susceptibles de provoquer des blessures.

15. Dispositif de sciage selon la revendication 14, **caractérisé en ce que**
- le dispositif de protection est une hotte de protection (80) qui est disposée au-dessus de la voie de scie et est montée mobile sur le pont (60),
- l'actionneur du dispositif de protection est un actionneur de hotte de protection qui est couplé à la hotte de protection (58) pour un déplacement de la hotte de protection (58) le long du pont (55) dans la direction de l'axe d'avance (VA), et
- le dispositif de commande du dispositif de protection est un dispositif de commande de hotte de protection (501) qui est couplé, par la technique des signaux, à l'actionneur de hotte de protection et à l'actionneur du groupe de sciage et est configuré pour commander l'actionneur de hotte de protection et l'actionneur du groupe de sciage de telle sorte que la hotte de protection (80) et le groupe de sciage (61) se déplacent de manière synchrone le long du sens d'avance (V) et la hotte de protection (80) est toujours positionnée relativement par rapport à l'axe de rotation dans une position horizontale constante au-dessus et par rapport à l'axe de rotation (R) du logement de lame de scie,
de plus, de préférence, la hotte de protection (80) étant montée sur le pont (60) de manière mobile verticalement et étant **caractérisée, en outre, par** une unité de couplage qui est configurée pour coupler un mouvement vertical de l'arbre de scie à un mouvement vertical de la hotte de protection de telle sorte que la hotte de protection est abaissée lorsque l'arbre de scie est relevé, et inversement.

16. Dispositif de sciage selon la revendication 14, **caractérisé en ce que**
- le dispositif de protection est un double store à lamelles (158) qui est disposé au-dessus de la voie de scie, s'étend dans le sens longitudinal du pont de part et d'autre de la voie de scie et est monté mobile verticalement sur le pont (155),
- l'actionneur du dispositif de protection est un actionneur de store qui est couplé au double store à lamelles (158) pour un mouvement du double store à lamelles (158) dans le sens vertical, et
- le dispositif de commande du dispositif de protection est un dispositif de commande du double store à lamelles (1501) qui est couplé, par la technique des signaux, à l'actionneur de store et à l'actionneur du groupe de sciage et est configuré pour commander l'actionneur de store et l'actionneur du groupe de sciage de telle sorte que le groupe de sciage (61) ne se laisse déplacer le long du sens d'avance (V) que lorsque le double store à lamelles (158) est déplacé dans une position abaissée, de telle sorte qu'il recouvre les parties du groupe de sciage susceptibles de provoquer des blessures.
